# EUROPEAN PATENT APPLICATION

(11) **EP 4 848 623 A1**
(43) Date of publication of application: **02.12.2026**
(21) Application number: 25751588.2
(22) Date of filing: 06.02.2025
(51) Int. Cl.: H04B 17/391

(54) **COMMUNICATION METHOD AND COMMUNICATION APPARATUS**

(30) Priority: 08.02.2024 CN 202410177187
(71) Applicant: HUAWEI TECHNOLOGIES CO., LTD., Shenzhen, Guangdong 518129 (CN)
(72) Inventor: TIAN, Yang, Shenzhen, Guangdong 518129 (CN); LI, Yuan, Shenzhen, Guangdong 518129 (CN); CHAI, Xiaomeng, Shenzhen, Guangdong 518129 (CN); SUN, Yan, Shenzhen, Guangdong 518129 (CN)
(74) Representative: Gill Jennings & Every LLP
(86) International application number: PCT/CN2025/076013
(87) International publication number: WO 2025/167989

(57) **Abstract**

This application provides a communication method and a communication apparatus. The method includes: A second device obtains first indication information from a first device, where the first indication information is used to determine a time unit in which reset status information of a first artificial intelligence AI model takes effect; and the second device determines, based on the first indication information, the time unit in which the reset status information of the first artificial intelligence AI model takes effect. The solutions in embodiments of this application help improve robustness of performance in recovering channel information.

## Description

This application claims priority to Chinese Patent Application No. 202410177187.6, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In a communication system, a network device needs to determine, based on downlink channel state information (channel state information, CSI), configuration information related to a downlink channel, for example, a resource, a modulation and coding scheme (modulation and coding scheme, MCS), and precoding for scheduling a downlink data channel of a terminal device. The terminal device may calculate the downlink CSI by measuring a downlink reference signal, and generate a CSI report to feed back to the network device, that is, feed back the CSI to the network device, or send CSI feedback information to the network device.

After artificial intelligence (artificial intelligence, AI) is introduced into wireless communication, an AI-based CSI feedback manner emerges. An AI model has a stronger feature extraction capability, and can more effectively compress channel information, reduce an information loss in a compression process, and ensure accuracy of recovered channel information. For example, for CSI feedback based on time-domain correlation, an AI model on a terminal device side outputs CSI feedback information based on a current channel measurement result and status information of the AI model. An AI model on a network device side recovers channel information based on the recently received CSI feedback information and status information of the AI model. The status information of the AI model on the terminal device side is determined based on a historical channel measurement result. The status information of the AI model on the network device side is determined based on CSI feedback information received at a historical moment. Because receiving of the CSI feedback information depends on a transmission condition of a channel, a packet loss of the CSI feedback information causes deterioration of performance in recovering the channel information.

Therefore, there is an urgent need for a solution to improve robustness of performance in recovering the channel information.

### SUMMARY

Embodiments of this application provide a communication method and a communication apparatus, to improve robustness of performance in recovering channel information.

According to a first aspect, a communication method is provided. The method may be performed by a second device, or may be performed by a chip or a circuit of the second device.

Optionally, the second device may be a device on a first AI model side. The device on the first AI model side may be replaced with a device on a terminal device side or a device on a network device side. The terminal device side may include at least one of a terminal device or an AI entity on the terminal device side. The AI entity on the terminal device side may be the terminal device, or may be an AI entity serving the terminal device, for example, a server such as an over-the-top (over the top, OTT) server or a cloud server. The network device side may include at least one of a network device or an AI entity on the network device side. The AI entity on the network device side may be the network device, or may be an AI entity serving the network device, for example, a radio access network (radio access network, RAN) intelligent controller (RAN intelligent controller, RIC), an operation, administration, and maintenance (operation administration and maintenance, OAM), or a server such as an OTT server or a cloud server.

The method includes: obtaining first indication information from a first device, where the first indication information is used to determine a time unit in which reset status information of a first AI model takes effect.

The effective time unit may alternatively be replaced with an effective moment.

For example, the time unit may include any one of the following: a slot (slot), a symbol (symbol), a transmission time interval (transmission time-interval, TTI), or the like.

The first AI model and a second AI model are auto-encoder models.

The first device is a device on a second AI model side.

The first AI model, for example, an AI model on a terminal device side, may be used to generate CSI feedback information. The second AI model, for example, an AI model on a network device side, that matches the first AI model such as the AI model on the terminal device side, may be used to recover channel information corresponding to the CSI feedback information.

Optionally, the device on the second AI model side may be a device on the network device side or a device on the terminal device side.

That the device on the first AI model side obtains the first indication information from the first device may include: The terminal device or a chip used by the terminal device obtains the first indication information from the first device, or the AI entity on the terminal device side or the chip used by the AI entity on the terminal device side obtains the first indication information from the first device. Optionally, the AI entity on the terminal device side or the chip used by the AI entity on the terminal device side may obtain the first indication information from the first device through forwarding by the terminal device.

In the solution of this embodiment of this application, the status information of the first AI model is reset, so that consistency between the status information of the first AI model and status information of the second AI model can be ensured. This helps ensure accuracy of recovered channel information, and helps improve robustness of performance of the second AI model in recovering the channel information. For example, when the CSI feedback information is lost, the status information of the first AI model and the status information of the second AI model are reset, to restore consistency between the status information of the first AI model and the status information of the second AI model, thereby helping improve accuracy of the recovered channel information.

In addition, in the solution of this embodiment of this application, the time unit in which the reset status information of the first AI model takes effect may be determined based on the first indication information. In this way, effective time of the reset status information of the first AI model is consistent with effective time of the reset status information of the second AI model, thereby further improving performance of the second AI model in recovering the channel information.

With reference to the first aspect, in some implementations of the first aspect, first CSI feedback information is sent to the first device in a first time unit, where the first CSI feedback information is related to the reset status information of the first AI model, and the first time unit is not earlier than the time unit in which the reset status information of the first AI model takes effect.

In the solution of this embodiment of this application, it may be determined, based on the first indication information, that the time unit in which the reset status information of the first AI model takes effect is not later than a sending moment of the first CSI feedback information (that is, the first time unit), and the reset status information of the first AI model may be used to generate the first CSI feedback information before the first CSI feedback information is sent. In this way, the second AI model side, for example, the network device side, may determine that the first CSI feedback information is generated when the reset status information takes effect, and may further recover, based on the reset status information of the second AI model, channel information corresponding to the first CSI feedback information. This helps ensure accuracy of the recovered channel information, and improves performance of the second AI model in recovering the channel information.

Further, a time interval between the first time unit and the time unit in which the reset status information of the first AI model takes effect is greater than or equal to processing time of the first AI model.

The processing time of the first AI model may alternatively be replaced with processing time of the terminal device, CSI processing time, CSI calculation time, or the like. For example, the processing time of the first AI model may include duration required for generating the CSI feedback information through processing of the first AI model.

This helps ensure that the first AI model side, for example, the terminal device side, can have sufficient time to generate the first CSI feedback information based on the reset status information of the first AI model.

With reference to the first aspect, in some implementations of the first aspect, the first indication information indicates to send uplink information on a first time resource, and the time unit in which the reset status information of the first AI model takes effect is not later than a start moment of the first time resource.

A time resource may include one or more time units. A start moment of the time resource may be understood as start time of a start time unit in the time resource.

With reference to the first aspect, in some implementations of the first aspect, the method further includes: determining a first time period, where an end moment of the first time period is not later than the start moment of the first time resource, and a length of the first time period is predefined, is indicated by the first indication information, or is indicated by information other than the first indication information.

With reference to the first aspect, in some implementations of the first aspect, the method further includes: obtaining a length of a first time period, where the length of the first time period is used to determine the time unit in which the reset status information of the first AI model takes effect, and the length of the first time period is predefined, is indicated by the first indication information, or is indicated by information other than the first indication information.

With reference to the first aspect, in some implementations of the first aspect, a start moment of the first time period is a sending moment of the first indication information, a receiving moment of the first indication information, or a moment indicated by the first indication information.

With reference to the first aspect, in some implementations of the first aspect, the method further includes: receiving scheduling information of second CSI feedback information, where a time resource for the second CSI feedback information indicated by the scheduling information overlaps the first time period, sending of the second CSI feedback information is ignored or skipped, where the second CSI feedback information is related to the first AI model.

The second CSI feedback information may be an output of the first AI model, or may be an output based on the first AI model. For example, quantization processing is performed on an output result of the first AI model, to obtain the second CSI feedback information.

In the solution of this embodiment of this application, if a time resource for CSI feedback information (for example, the second CSI feedback information) indicated by scheduling information overlaps the first time period, sending of the CSI feedback information is ignored or skipped. In this way, a case in which the second AI model side cannot determine whether the second CSI feedback information is generated when the reset status information of the first AI model takes effect can be avoided, thereby preventing the second AI model from recovering channel information based on unmatched status information, and helping ensure accuracy of the recovered channel information.

With reference to the first aspect, in some implementations of the first aspect, the first indication information indicates resetting of the status information of the first AI model.

With reference to the first aspect, in some implementations of the first aspect, the method further includes: obtaining second indication information from the first device, where the second indication information indicates resetting of the status information of the first AI model.

With reference to the first aspect, in some implementations of the first aspect, the first indication information is related to duration required for resetting the status information of the first AI model, and the duration required for resetting the status information of the first AI model is predefined.

For example, the length of the first time period is indicated by the first indication information, and the length of the first time period is greater than or equal to the duration required for resetting the status information of the first AI model.

In the solution of this embodiment of this application, the first indication information may be determined based on the duration required for resetting the status information of the first AI model. This helps ensure that the first AI model side, for example, the terminal device side, has sufficient time to complete resetting of the status information of the first AI model, so that the reset status information of the first AI model takes effect.

With reference to the first aspect, in some implementations of the first aspect, the first indication information is related to duration required for resetting the status information of the first AI model, and the method further includes: sending third indication information to the first device or a device other than the first device, where the third indication information indicates the duration required for resetting the status information of the first AI model.

In the solution of this embodiment of this application, the first indication information may be determined based on the duration required for resetting the status information of the first AI model. This helps ensure that the first AI model side, for example, the terminal device side, has sufficient time to complete resetting of the status information of the first AI model, so that the reset status information of the first AI model takes effect.

With reference to the first aspect, in some implementations of the first aspect, the third indication information is carried in signaling, sent by a terminal device, that carries a capability of the terminal device, or the third indication information is carried in signaling that carries configuration information of the first AI model.

With reference to the first aspect, in some implementations of the first aspect, the first indication information is carried in first downlink control information (downlink control information, DCI) and/or higher layer signaling, where the higher layer signaling includes radio resource control signaling or media access control control element signaling.

With reference to the first aspect, in some implementations of the first aspect, the first DCI is any one of the following: The first DCI is further used to trigger the first CSI feedback information, where the first CSI feedback information belongs to an aperiodic CSI report; the first DCI is further used to schedule or configure an uplink shared channel, where the uplink shared channel does not include CSI feedback information; or the first DCI is further used to carry first indication information of another terminal device.

With reference to the first aspect, in some implementations of the first aspect, an input of the first AI model includes a channel measurement result of a first reference signal, the first CSI feedback information is an output of the first AI model or an output based on the first AI model, the output of the first AI model is related to the measurement result of the first reference signal and the reset status information of the first AI model, and the reset status information of the first AI model is initial status information, or the reset status information of the first AI model is status information of the first AI model before a sending moment of the first reference signal.

According to a second aspect, a communication method is provided. The method may be performed by a first device, or may be performed by a chip or a circuit of the first device.

The first device may be a device on a second AI model side. The device on the second AI model side may be replaced with a device on a terminal device side or a device on a network device side. The terminal device side may include at least one of a terminal device or an AI entity on the terminal device side. The AI entity on the terminal device side may be the terminal device, or may be an AI entity serving the terminal device, for example, a server such as an OTT server or a cloud server. The network device side may include at least one of a network device or an AI entity on the network device side. The AI entity on the network device side may be the network device, or may be an AI entity serving the network device, for example, a RIC, an OAM, or a server such as an OTT server or a cloud server.

The method includes: sending first indication information to a second device, where the first indication information is used to determine a time unit in which reset status information of a first AI model takes effect.

The first AI model and a second AI model are auto-encoder models.

The second device is a device on a first AI model side.

The first AI model, for example, an AI model on a terminal device side, may be used to generate CSI feedback information. A second AI model, for example, an AI model on a network device side, that matches the first AI model such as an AI model on a terminal device side, may be used to recover channel information corresponding to the CSI feedback information.

Optionally, the device on the first AI model side may be a device on the terminal device side or a device on the network device side.

That the device on the second AI model side sends the first indication information to the second device may include: The network device or a chip used for the network device sends the first indication information, or the AI entity on the network device side or a chip used for the AI entity on the network device side sends the first indication information. Optionally, the AI entity on the network device side or the chip used for the AI entity on the network device side may send the first indication information to the second device through forwarding by the network device.

With reference to the second aspect, in some implementations of the second aspect, the method further includes: receiving first CSI feedback information from the second device in a first time unit, where the first CSI feedback information is related to the reset status information of the first AI model, and the first time unit is not earlier than the time unit in which the reset status information of the first AI model takes effect.

With reference to the second aspect, in some implementations of the second aspect, the first indication information indicates to send uplink information on a first time resource, and the time unit in which the reset status information of the first AI model takes effect is not later than a start moment of the first time resource.

With reference to the second aspect, in some implementations of the second aspect, the first indication information indicates a length of a first time period, or the method further includes: sending fourth indication information to the second device, where the fourth indication information indicates the length of the first time period, and an end moment of the first time period is not later than the start moment of the first time resource.

With reference to the second aspect, in some implementations of the second aspect, the first indication information indicates a length of the first time period, or the method further includes: sending fourth indication information to the second device, where the fourth indication information indicates the length of the first time period, and the length of the first time period is used to determine the time unit in which the reset status information of the first AI model takes effect.

With reference to the second aspect, in some implementations of the second aspect, a start moment of the first time period is a sending moment of the first indication information, a receiving moment of the first indication information, or a moment indicated by the first indication information.

With reference to the second aspect, in some implementations of the second aspect, the method further includes: sending scheduling information of third CSI feedback information, where a time resource for the third CSI feedback information indicated by the scheduling information does not include the first time period; and receiving the third CSI feedback information, where the third CSI feedback information is related to the first AI model.

With reference to the second aspect, in some implementations of the second aspect, the first indication information indicates resetting of the status information of the first AI model.

With reference to the second aspect, in some implementations of the second aspect, the method further includes: sending second indication information to the second device, where the second indication information indicates resetting of the status information of the first AI model.

With reference to the second aspect, in some implementations of the second aspect, the first indication information is related to duration required for resetting the status information of the first AI model, and the duration required for resetting the status information of the first AI model is predefined.

With reference to the second aspect, in some implementations of the second aspect, the first indication information is related to duration required for resetting the status information of the first AI model, and the method further includes: receiving third indication information from the second device or a device other than the second device, where the third indication information indicates the duration required for resetting the status information of the first AI model.

With reference to the second aspect, in some implementations of the second aspect, the third indication information is carried in signaling, sent by a terminal device, that carries a capability of the terminal device, or the third indication information is carried in signaling that carries configuration information of the first AI model.

With reference to the second aspect, in some implementations of the second aspect, the first indication information is carried in first downlink control information DCI and/or higher layer signaling, where the higher layer signaling includes radio resource control signaling or media access control control element signaling.

With reference to the second aspect, in some implementations of the second aspect, the first DCI is any one of the following: The first DCI is further used to trigger first CSI feedback information, where the first CSI feedback information belongs to an aperiodic CSI report; the first DCI is further used to schedule or configure an uplink shared channel, where the uplink shared channel does not include CSI feedback information; or the first DCI is further used to carry first indication information of another terminal device.

With reference to the second aspect, in some implementations of the second aspect, an input of the first AI model includes a channel measurement result of a first reference signal, the first CSI feedback information is an output of the first AI model or an output based on the first AI model, the output of the first AI model is related to the measurement result of the first reference signal and the reset status information of the first AI model, and the reset status information of the first AI model is initial status information, or the reset status information of the first AI model is status information of the first AI model before a sending moment of the first reference signal.

According to a third aspect, a communication apparatus is provided. The communication apparatus may be a terminal device, may be an apparatus, a module, a circuit, a chip, or the like disposed in a terminal device, or may be an apparatus that can be used together with a terminal device. In a design, the communication apparatus may include modules that one-to-one correspond to methods/operations/steps/actions described in the first aspect. The modules may be implemented by a hardware circuit, software, or a combination of a hardware circuit and software. In a design, the communication apparatus may include a processing module and a communication module.

A sending module is configured to perform a sending action in the method described in the first aspect, the processing module is configured to perform a processing-related action in the method described in the first aspect, and a receiving module is configured to perform a receiving-related action in the method described in the first aspect.

According to a fourth aspect, a communication apparatus is provided. The communication apparatus may be a network device, may be an apparatus, a module, a circuit, a chip, or the like disposed in a network device, or may be an apparatus that can be used together with a network device. In a design, the communication apparatus may include modules that one-to-one correspond to methods/operations/steps/actions described in the second aspect. The modules may be implemented by a hardware circuit, software, or a combination of a hardware circuit and software. In a design, the communication apparatus may include a processing module and a communication module.

A receiving module is configured to perform a receiving action in the method described in the second aspect, the processing module is configured to perform a processing-related action in the method described in the second aspect, and a sending module is configured to perform a sending action in the method described in the second aspect.

According to a fifth aspect, a communication apparatus is provided, including one or more processors coupled to one or more storage media. The one or more storage media store instructions, and when the instructions are run by the one or more processors, the method according to the first aspect or any one of the possible implementations of the first aspect is implemented, or the method according to the second aspect or any one of the possible implementations of the second aspect is implemented.

According to a sixth aspect, a communication apparatus is provided, including one or more processors. The one or more processors are configured to process data and/or information, so that the method according to the first aspect or any one of the possible implementations of the first aspect is implemented, or the method according to the second aspect or any one of the possible implementations of the second aspect is implemented.

Optionally, the communication apparatus may further include a communication interface. The communication interface is configured to: receive data and/or information, and transmit the received data and/or information to the processor. Optionally, the communication interface is further configured to output data and/or information processed by the processor.

According to a seventh aspect, a chip is provided, including a processor. The processor is configured to run a program or instructions, so that the method according to the first aspect or any one of the possible implementations of the first aspect or the method according to the second aspect or any one of the possible implementations of the second aspect is implemented.

Optionally, the chip may further include a memory, and the memory is configured to store the program or the instructions. Optionally, the chip may further include a transceiver.

According to an eighth aspect, a computer-readable storage medium is provided. The computer-readable storage medium includes instructions, and when the instructions are run by a processor, the method according to the first aspect or any one of the possible implementations of the first aspect or the method according to the second aspect or any one of the possible implementations of the second aspect is implemented.

According to a ninth aspect, a computer program product is provided. The computer program product includes computer program code or instructions, and when the computer program code or the instructions are run, the method according to the first aspect or any one of the possible implementations of the first aspect or the method according to the second aspect or any one of the possible implementations of the second aspect is implemented.

According to a tenth aspect, a communication system is provided. The communication system includes one or a combination of the following apparatuses: a communication apparatus that performs the method according to the first aspect or any one of the possible implementations of the first aspect, and a communication apparatus that performs the method according to the second aspect or any one of the possible implementations of the second aspect. For example, the communication system may include the communication apparatus provided in the third aspect and/or the communication apparatus provided in the fourth aspect.

### BRIEF DESCRIPTION OF DRAWINGS

FIG. 1 is a diagram of a communication system applicable to an embodiment of this application;
FIG. 2 is a diagram of another communication system applicable to an embodiment of this application;
FIG. 3 is a block diagram of an auto-encoder;
FIG. 4 is a diagram of an AI application framework;
FIG. 5 is a diagram of a CSI feedback procedure based on time-domain correlation;
FIG. 6 is a diagram of another CSI feedback procedure based on time-domain correlation;
FIG. 7 is a schematic flowchart of a communication method according to an embodiment of this application;
FIG. 8 is a schematic flowchart of another communication method according to an embodiment of this application;
FIG. 9 is a schematic flowchart of still another communication method according to an embodiment of this application;
FIG. 10 is a schematic flowchart of yet another communication method according to an embodiment of this application;
FIG. 11 is a schematic flowchart of still yet another communication method according to an embodiment of this application;
FIG. 12A and FIG. 12B are a schematic flowchart of a further communication method according to an embodiment of this application;
FIG. 13 is a schematic flowchart of a still further communication method according to an embodiment of this application;
FIG. 14 is a diagram of a CSI feedback procedure according to an embodiment of this application;
FIG. 15 is a schematic flowchart of a yet further communication method according to an embodiment of this application;
FIG. 16 is a schematic flowchart of a still yet further communication method according to an embodiment of this application;
FIG. 17 is a diagram of another CSI feedback procedure according to an embodiment of this application;
FIG. 18A, FIG. 18B, FIG. 18C, and FIG. 18D are diagrams of four types of indication signaling of first indication information according to an embodiment of this application;
FIG. 19 is a block diagram of a communication apparatus according to an embodiment of this application;
FIG. 20 is a block diagram of another communication apparatus according to an embodiment of this application; and
FIG. 21 is a diagram of still another CSI feedback procedure according to an embodiment of this application.

### DESCRIPTION OF EMBODIMENTS

The following describes the technical solutions of this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a future mobile communication system, or a system integrating a plurality of systems. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or other communication systems.

A device in the communication system may send a signal to another device or receive a signal from another device. The signal may include information, signaling, data, and the like. The device may alternatively be replaced with an entity, a network entity, a network element, a communication device, a communication module, a node, a communication node, or the like. In this disclosure, a device is used as an example for description. For example, the communication system may include at least one terminal device and at least one network device. In the communication system, the network device may send a downlink signal to the terminal device, the terminal device may send an uplink signal to the network device, the network device may send a signal to another network device, and the terminal device may send a sidelink signal to another terminal device. It may be understood that, in this disclosure, the terminal device may be replaced with a second device, the network device may be replaced with a first device, and the terminal device and the network device perform a corresponding communication method in this disclosure.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, the terminal may be, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in telemedicine, a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device with a wireless communication function or another processing device connected to a wireless modem, a wearable device, a terminal device in a 5G network, a terminal device in a future evolved public land mobile network (public land mobile network, PLMN), or the like. This is not limited in embodiments of this application.

By way of example rather than limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, watches, clothing, and shoes. The wearable device is a portable device that can be directly worn on the body or integrated into clothes or an accessory of a user. The wearable device is not only a hardware device, but also implements powerful functions through software support, data exchange, and cloud interaction. In a broad sense, wearable intelligent devices include full-featured and large-sized devices that can implement complete or partial functions without depending on smartphones, such as smart watches or smart glasses, and devices that focus only on one type of application function and need to work with other devices such as smartphones, for example, various smart bands or smart jewelry for monitoring physical signs.

In embodiments of this application, an apparatus configured to implement functions of a terminal device may be a terminal device, or may be an apparatus that can support the terminal device in implementing the functions, such as a chip system. The apparatus may be installed in the terminal device or used together with the terminal device. In embodiments of this application, a chip system may include a chip, or may include a chip and another discrete device. In embodiments of this application, an example in which the apparatus configured to implement the functions of the terminal device is a terminal device is merely used for description, and constitutes no limitation on the solutions in embodiments of this application.

A network device in embodiments of this application may be a device configured to communicate with the terminal device. The network device may also be referred to as an access network device or a radio access network device. For example, the network device may be a base station. The network device in embodiments of this application may be a RAN node (or device) that enables the terminal device to access a wireless network. The base station may cover any of the following names in a broad sense, or may be replaced with the following names: for example, a NodeB (NodeB), an evolved NodeB (evolved NodeB, eNB), a next-generation NodeB (next generation NodeB, gNB), a relay station, an access point, a transmission reception point (transmitting and receiving point, TRP), a transmission point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that performs functions of a base station in D2D, V2X, or M2M communication, a network-side device in a future communication network, a device that performs functions of a base station in a future communication system, or the like. The base station may support networks using a same access technology or different access technologies. Optionally, the RAN node may alternatively be a server, a wearable device, a vehicle, a vehicle-mounted device, or the like. For example, an access network device in a V2X technology may be a roadside unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU, a DU, or a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes collaborate to assist a terminal in implementing radio access, and different RAN nodes respectively implement some functions of a base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions.

If a fronthaul interface between a DU and an RU is a common public radio interface (common public radio interface, CPRI), the DU is configured to implement one or more baseband functions, and the RU is configured to implement one or more radio frequency functions.

If a fronthaul interface between a DU and an RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation.

In a possible implementation, the interface may be an enhanced common public radio interface (enhanced common public radio interface, eCPRI). In an eCPRI architecture, different split modes between the DU and RU correspond to different categories (category, Cat) of eCPRIs, for example, eCPRI Cats A, B, C, D, E, and F.

The eCPRI Cat A is used as an example. For downlink transmission, with layer mapping being a split point, the DU is configured to implement layer mapping and one or more functions before layer mapping (that is, one or more of encoding, rate matching, scrambling, modulation, and layer mapping), and other functions after layer mapping (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) are implemented in the RU. For uplink transmission, with RE de-mapping being a splitting point, the DU is configured to implement de-mapping and one or more functions before de-mapping (that is, one or more functions of decoding, rate de-matching, descrambling, demodulation, inverse discrete Fourier transform (inverse discrete Fourier transform, IDFT), channel equalization, and RE de-mapping), and other functions after de-mapping (for example, one or more of digital BF or fast Fourier transform (fast Fourier transform, FFT)/CP removal) are implemented in the RU. It may be understood that for function descriptions of DUs and RUs corresponding to various categories of eCPRIs, refer to an eCPRI protocol. Details are not described herein.

In a possible design, a processing unit for implementing a baseband function in the BBU is referred to as a baseband high (base band high, BBH) unit, and a processing unit for implementing a baseband function in the RRU/AAU/RRH is referred to as a baseband low (base band low, BBL) unit.

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement functions of a network device may be a network device, or may be an apparatus that can support the network device in implementing the functions, for example, a chip system, a hardware circuit, a software module, or a combination of a hardware circuit and a software module. The apparatus may be installed in the network device or used together with the network device. In embodiments of this application, an example in which the apparatus configured to implement the functions of the network device is a network device is merely used for description, and constitutes no limitation on the solutions in embodiments of this application.

The network device and/or the terminal device may be deployed on land, including being deployed indoor, outdoor, handheld, and/or vehicle-mounted; may be deployed on a water surface (such as a ship); or may be deployed in air (such as an airplane, a balloon, and/or a satellite). Scenarios in which the network device and the terminal device are located are not limited in embodiments of this application.

In addition, the terminal device and the network device may be hardware devices; may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by a network are increasingly diversified, leading to a growing variety of service requirements that need to be met. For example, the network needs to support an ultrahigh rate, an ultra-low latency, and/or massive connections. This feature makes network planning, network configuration, and/or resource scheduling increasingly complex. In addition, because functions of the network are increasingly powerful, for example, the network supports an increasingly high spectrum and new technologies such as a high-order multiple-input multiple-output (multiple input multiple output, MIMO) technology, beamforming, and/or beam management, network energy saving becomes a hot research topic. These new requirements, scenarios, and features bring unprecedented challenges to network planning, operation and maintenance, and efficient operation. To meet these challenges, an artificial intelligence technology may be introduced into the wireless communication network, to implement network intelligence.

To support the AI technology in a wireless network, an AI node (which may also be referred to as an AI entity) may be further introduced into the network.

Optionally, the AI entity may be deployed in a communication system at one or more of the following locations: an access network device, a terminal device, a core network device, or the like. Alternatively, the AI entity may be independently deployed, for example, deployed at a location other than any one of the foregoing devices, such as a host or a cloud server in an OTT system. The AI entity may communicate with another device in the communication system. The another device may be, for example, one or more of the following: a network device, a terminal device, or a network element in a core network. Based on an object served by the AI entity, the AI entity may include an AI entity on a network device side, an AI entity on a terminal device side, or an AI entity on a core network side.

It may be understood that a quantity of AI entities is not limited in this application. For example, when there are a plurality of AI entities, the plurality of AI entities may be divided based on functions. For example, different AI entities are responsible for different functions.

It may be further understood that AI entities may be devices that are independent of each other, or may be integrated into a same device to implement different functions. Alternatively, the AI entity may be a network element in a hardware device, may be a software function running on dedicated hardware, or may be a virtualized function instantiated on a platform (for example, a cloud platform). A specific form of the AI entity is not limited in this application.

The AI entity may be an AI network element or an AI module. The AI entity is configured to implement a corresponding AI function. AI modules deployed in different network elements may be the same or different. The AI model in the AI entity enables the AI entity to implement different functions based on different parameter configurations. The AI model in the AI entity may be configured based on one or more of the following parameters: structure parameters (for example, at least one of a quantity of neural network layers, a width of a neural network, a connection relationship between layers, a weight of a neuron, an activation function of the neuron, or a bias in the activation function), input parameters (for example, types of the input parameters and/or dimensions of the input parameters), or output parameters (for example, types of the output parameters and/or dimensions of the output parameters). The bias in the activation function may also be referred to as a bias of the neural network.

One AI entity may have one or more models. Learning processes, training processes, or inference processes of different models may be deployed on different entities or devices, or may be deployed on a same entity or device.

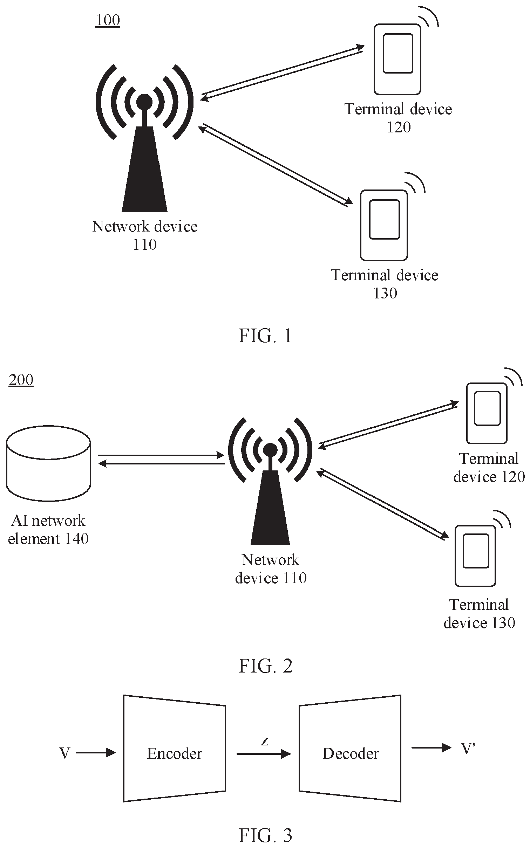

FIG. 1 is a diagram of a communication system applicable to a communication method according to an embodiment of this application. As shown in FIG. 1, a communication system 100 may include at least one network device, for example, a network device 110 shown in FIG. 1; and the communication system 100 may further include at least one terminal device, for example, a terminal device 120 and a terminal device 130 shown in FIG. 1. The network device 110 may communicate with the terminal device (for example, the terminal device 120 and the terminal device 130) through a radio link. Communication devices in the communication system, for example, the network device 110 and the terminal device 120, may communicate with each other by using a multi-antenna technology.

FIG. 2 is a diagram of another communication system applicable to a communication method according to an embodiment of this application. Compared with the communication system 100 shown in FIG. 1, a communication system 200 shown in FIG. 2 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs a training dataset and trains the AI model. For example, the data related to training of the AI model may include data reported by a terminal device. The AI network element 140 may send a result of an operation related to the AI model to the network device 110, and the network device 110 forwards the result to the terminal device. For example, the result of the operation related to the AI model may include at least one of the following: a trained AI model, an evaluation result or a test result of the model, or the like. For example, a part of the trained AI model may be deployed on the network device 110, and the other part may be deployed on the terminal device. Alternatively, the trained AI model may be deployed on the network device 110. Alternatively, the trained AI model may be deployed on the terminal device.

It should be understood that, in FIG. 2, that the AI network element 140 is directly connected to the network device 110 is only used an example for description. In other scenarios, the AI network element 140 may alternatively be connected to the terminal device, the AI network element 140 may be connected to both the network device 110 and the terminal device, or the AI network element 140 may be connected to the network device 110 via a third-party network element. A connection relationship between the AI network element and another network element is not limited in embodiments of this application.

The AI network element 140 may alternatively be disposed in the network device and/or the terminal device as a module, for example, disposed in the network device 110 or the terminal device shown in FIG. 1. One or more AI modules may be deployed in the network device 110. One or more AI modules may be deployed in the terminal device.

It should be noted that FIG. 1 and FIG. 2 are merely simplified diagrams of examples for ease of understanding. For example, the communication system may further include other devices, for example, may further include a wireless relay device and/or a wireless backhaul device, which are/is not shown in FIG. 1 and FIG. 2. During actual application, the communication system may include a plurality of network devices, and may also include a plurality of terminal devices. Quantities of network devices and terminal devices included in the communication system are not limited in embodiments of this application.

For ease of understanding the solutions in embodiments of this application, the following describes terms that may be used in embodiments of this application.

### (1) AI model

The AI model is an algorithm or a computer program that can implement an AI function. The AI model represents a mapping relationship between an input and an output of the model. The AI model may be understood as a function model that maps an input of a specific dimension to an output of a specific dimension, and a model parameter of the AI model is obtained through machine learning training. For example, f(x)=ax²+b is a quadratic function model, and the model may be considered as an AI model, where a and b correspond to parameters of the AI model, and may be obtained through machine learning training. The AI model may also be referred to as a model, an AI function, or a function. One AI function may correspond to one or more AI models.

A type of the AI model may be a neural network, a linear regression model, a decision tree model, a support vector machine (support vector machine, SVM), a Bayesian network, a Q-learning model, or another machine learning (machine learning, ML) model.

### (2) Two-side model

The two-side model may also be referred to as a bilateral model, a cooperative model, a dual model, a two-side (two-side) model, or the like. The two-side model is a model including a plurality of submodels. The plurality of submodels included in the model need to match each other. The plurality of submodels may be deployed on different nodes.

Embodiments of this application relate to an encoder for compressing channel information and a decoder for recovering the channel information. That the encoder and the decoder are used together may be understood that the encoder and the decoder are paired AI models. One encoder may include one or more AI models, and a decoder matching the encoder also includes one or more AI models. The encoder and the decoder that are used together include a same quantity of AI models, and the AI models are in a one-to-one correspondence. The encoder may further include a quantization module, and the quantization module may be configured to perform quantization processing on an output of an AI model in the encoder. The decoder may include a dequantization module, and the dequantization module may be configured to perform dequantization processing on received feedback information of channel information, to obtain an input of an AI model in the decoder. Dequantization processing may also be referred to as dequantization processing.

In a possible design, an encoder (encoder) and a decoder (decoder) that are used together may be two parts of a same auto-encoder (auto-encoder, AE). An AE model in which an encoder and a decoder are separately deployed on different nodes is a typical bilateral model. The encoder and the decoder of the AE model are usually an encoder and a decoder that are jointly trained and that are used together. The auto-encoder is an unsupervised learning neural network, and is characterized by using input data as label data. Therefore, the auto-encoder may also be understood as a self-supervised learning neural network. The auto-encoder may be configured to compress and recover data. For example, the encoder in the auto-encoder may compress (encode) data A to obtain data B, and the decoder in the auto-encoder may decompress (decode) the data B to recover the data A. Alternatively, it may be understood that the decoder implements an inverse operation of the encoder.

For example, as shown in FIG. 3, the encoder processes an input V to obtain a processed result z, and the decoder can decode the output z of the encoder into an expected output V'.

The AI model in embodiments of this application may include an encoder deployed on a terminal device side and a decoder deployed on a network device side, may include an encoder deployed on a terminal device side and a decoder deployed on another terminal device side, or may include an encoder deployed on a network device side and a decoder deployed on another network device side.

### (3) Neural network (neural network, NN)

The neural network is a specific implementation form of AI or machine learning. According to the universal approximation theorem, the neural network can theoretically approximate any continuous function, so that the neural network has a capability of learning any mapping.

The neural network may include neurons, where a neuron may be a computational unit that uses xₛ and an intercept 1 as inputs. The neural network is a network formed by connecting many single neurons together. To be specific, an output of a neuron may be an input of another neuron. An input of each neuron may be connected to a local receptive field of a previous layer, to extract a feature of the local receptive field. The local receptive field may be an area including several neurons.

For example, a type of an AI model is a neural network. The AI model in this disclosure may be a deep neural network (deep neural network, DNN). Based on a network construction manner, the DNN may include a feedforward neural network (feed forward neural network, FNN), a convolutional neural network (convolutional neural network, CNN), a recurrent neural network (recurrent neural network, RNN), and the like.

The CNN is a neural network dedicated to processing data with a grid-like structure. For example, both time series data (timeline discrete sampling) and image data (two-dimensional discrete sampling) may be considered as data with a grid-like structure. The CNN does not use all input information at one time for computation. Instead, the CNN uses a window with a fixed size to extract partial information for convolution operations. This greatly reduces a computational amount of a model parameter. In addition, based on different types of information extracted by using the window (for example, a person and an object in a same image are information of different types), each window may use a different convolution kernel operation, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having time correlation, and is especially suitable for applications such as speech recognition and channel encoding and decoding.

A characteristic of the FNN network is that every two neurons at adjacent layers are completely connected. Therefore, the FNN usually requires a large amount of storage space, resulting in high computing complexity.

The FNN, CNN, and RNN are all constructed based on neurons. As mentioned earlier, each neuron performs a weighted summation operation on input values, and outputs a result of weighted summation through a non-linear function. A weight used by a neuron to perform the weighted summation operation in the neural network and the non-linear function are referred to as parameters of the neural network. Parameters of all neurons in a neural network form parameters of the neural network.

### (4) Dataset

The dataset refers to data used for model training, validation, and testing in machine learning. An amount and quality of data affect machine learning effect.

In the machine learning field, a ground truth (ground truth) is usually considered as accurate data or true data.

A training dataset is used to train an AI model. The training dataset may include an input of the AI model, or include an input and a target output of the AI model. The training dataset includes one or more pieces of training data. The training data may include a training sample input into the AI model, and may also include the target output of the AI model. The target output may also be referred to as a label, a sample label, or a label sample. The label is a ground truth.

In the communication field, the training dataset may include simulated data collected by a simulation platform, may include experimental data collected in an experiment scenario, or may include actually measured data collected in an actual communication network. Geographical environments and channel conditions for data generation are different. For example, indoor or outdoor environments, moving speeds, frequency bands, or antenna configurations are different. Therefore, collected data may be classified when the data is obtained. For example, data with a same channel propagation environment and a same antenna configuration is classified into one type.

Model training is essentially learning some features of training data from the training data. In a process of training an AI model (for example, a neural network model), because an output of the AI model is expected to be as close as possible to a value that is actually expected to be predicted, a current predicted value of a network may be compared with a target value that is actually expected, and then a weight vector of each layer of the AI model is updated based on a difference between the two values (certainly, an initialization process is usually performed before the first update, that is, a parameter is preconfigured for each layer of the AI model). For example, if the predicted value of the network is larger, the weight vector is adjusted to obtain a smaller predicted value, and the weight vector is continuously adjusted until the AI model can predict the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations that are used to measure the difference between the predicted value and the target value. The loss function is used as an example. A larger output value (loss) of the loss function indicates a larger difference. In this case, training of the AI model is a process of minimizing the loss as much as possible, so that a value of the loss function is less than a threshold, or the value of the loss function meets a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of the neuron.

Inference data may be used as an input of a trained AI model for inference of the AI model. In a process of model inference, the inference data may be input into the AI model to obtain a corresponding output, that is, an inference result.

### (5) AI model design

The AI model design mainly includes a data collection phase (for example, collection of training data and/or inference data), a model training phase, and a model inference phase, and may further include an inference result application phase.

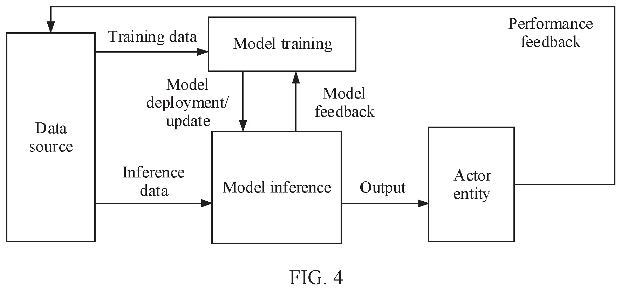

FIG. 4 shows an AI application framework.

In the data collection phase, a data source (data source) is used to provide a training dataset and inference data. In the model training phase, the training data (training data) provided by the data source is analyzed or trained to obtain an AI model. The AI model represents a mapping relationship between an input and an output of the model. That a model training node obtains the AI model through learning is equivalent to obtaining the mapping relationship between the input and the output of the model through learning by using the training data. In the model inference phase, the AI model trained in the model training phase is used to perform inference based on the inference data provided by the data source, to obtain an inference result. This phase may also be understood as inputting the inference data into the AI model to obtain an output by using the AI model. The output is the inference result. The inference result may indicate a configuration parameter used (executed) by an execution object, and/or an operation performed by the execution object. The inference result is released in the inference result application phase. For example, the inference result may be centrally planned by an actor (actor) entity. For example, the actor entity may send the inference result to one or more execution objects (for example, a network device or a terminal device) for execution. For another example, the actor entity may further feed back performance of the model to the data source, to facilitate subsequent update training of the model.

It may be understood that a communication system may include a network element having an AI function. The foregoing phases related to the AI model design may be performed by one or more network elements having the artificial intelligence function. In a possible design, the AI function (for example, an AI module or an AI entity) may be configured in an existing network element in the communication system to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to a network device in the communication system, or may be indirectly connected to a network device via a third-party network element. The third-party network element may be a core network element such as an authentication management function (authentication management function, AMF) network element or a user plane function (user plane function, UPF) network element, an OAM, a cloud server, or another network element. This is not limited. For example, the independent network element may be deployed on one or more of a network device side, a terminal device side, or a core network side. Optionally, the independent network element may be deployed on a cloud server, an OTT, or an OAM. For example, the AI network element 140 is introduced into the communication system shown in FIG. 2.

Training processes of different models may be deployed on different devices or nodes, or may be deployed on a same device or node. Inference processes of different models may be deployed on different devices or nodes, or may be deployed on a same device or node. For example, a terminal device completes a model training phase. After training an encoder and a decoder that are paired, the terminal device may send a model parameter of the decoder to a network device. For example, a network device completes a model training phase. After training an encoder and a decoder that are paired, the network device may indicate a model parameter of the encoder to a terminal device. For example, an independent AI network element completes a model training phase. After training an encoder and a decoder that are paired, the AI network element may send a model parameter of the encoder to a terminal device, and send a model parameter of the decoder to a network device. Then, a model inference phase corresponding to the encoder is performed in the terminal device, and a model inference phase corresponding to the decoder is performed in the network device.

The model parameter may include one or more of the following: structure parameters of the model (for example, a quantity of layers and/or a weight of the model), input parameters of the model (for example, input dimensions or a quantity of input ports), or output parameters of the model (for example, output dimensions or a quantity of output ports). It may be understood that the input dimension may be a size of one piece of input data. For example, when the input data is a sequence, an input dimension corresponding to the sequence may indicate a length of the sequence. The quantity of input ports may be an amount of input data. Similarly, the output dimension may be a size of one piece of output data. For example, when the output data is a sequence, an output dimension corresponding to the sequence may indicate a length of the sequence. The quantity of output ports may be an amount of output data.

### (6) Channel information

In a communication system (for example, an LTE communication system or an NR communication system), a network device determines, based on channel information, one or more of configurations such as a resource, an MCS, and precoding for scheduling a downlink data channel of a terminal device. It may be understood that the channel information may also be referred to as channel state information (channel state information, CSI) or channel environment information, and is information that can reflect a channel characteristic and channel quality.

Channel information measurement means that a receiver solves channel information based on a reference signal sent by a transmitter, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. One or more of the CSI-RS, the SSB, the DMRS, and the like may be used to measure downlink channel information. The SRS and/or the DMRS may be used to measure uplink channel information.

The channel information may be determined based on a channel measurement result of a reference signal. Alternatively, the channel information may be the channel measurement result of the reference signal. In embodiments of this application, the channel measurement result of the reference signal may also be replaced with the channel information.

An FDD communication scenario is used as an example. In the FDD communication scenario, because uplink and downlink channels are not reciprocal or reciprocity of the uplink and downlink channels cannot be ensured, a network device needs to obtain downlink CSI through uplink feedback performed by a terminal device. The network device usually sends a downlink reference signal to the terminal device, and the terminal device receives the downlink reference signal. Because the terminal device already learns of sending information of the downlink reference signal, the terminal device may perform, based on the received downlink reference signal, channel measurement and interference measurement estimation (measurement) to obtain a downlink channel through which the downlink reference signal passes. The terminal device generates downlink CSI based on a downlink channel matrix obtained through measurement. The terminal device generates a CSI report in a manner predefined in a protocol or in a manner configured by the network device, and feeds back the CSI report to the network device, so that the network device obtains the downlink CSI.

In this application, a meaning of CSI is broader than a meaning of CSI in a conventional solution, and is not limited to a channel quality indicator (channel quality indication, CQI), a precoding matrix indicator (precoding matrix indicator, PMI), a rank indicator (rank indicator, RI), or a CSI-RS resource indicator (CSI-RS resource indicator, CRI). The CSI may alternatively be one or more of channel response information (for example, a channel response matrix, frequency domain channel response information, or time domain channel response information), weight information corresponding to a channel response, reference signal received power (reference signal received power, RSRP), a signal to interference plus noise ratio (signal to interference plus noise ratio, SINR), or the like.

The RI indicates a quantity of layers for downlink transmission recommended by a receiver of a reference signal, for example, a terminal device. The CQI indicates a modulation and coding scheme that can be supported by a current channel condition and that is determined by the receiver of the reference signal, for example, the terminal device. The PMI indicates a precoding matrix recommended by the receiver of the reference signal, for example, the terminal device. A quantity of precoding layers indicated by the PMI corresponds to the RI.

As described above, the channel information may be obtained by measuring the reference signal. Feedback information may be obtained by performing a compression operation and/or a quantization operation on the channel information. The feedback information may be reported through a channel information report. The channel information may be recovered by performing a decompression operation and/or a dequantization operation on the feedback information.

The feedback information may also be referred to as feedback information of the channel information, feedback information of the CSI, CSI feedback information, compressed information, compressed information of the channel information, compressed information of the CSI, compressed channel information, compressed CSI, or the like.

The recovered channel information may also be referred to as CSI recovery information.

As an antenna array scale of a MIMO system continuously increases, a supported quantity of antenna ports increases, and dimensions of a corresponding channel matrix and a corresponding precoding matrix increase. An error in approximately representing a large-scale channel matrix and a precoding matrix by using a limited quantity of predefined codewords increases. A method for improving channel recovery precision is to increase a quantity of codewords in a codebook. However, this also increases overheads of CSI feedback (including one or more of a number corresponding to a codeword and a weighting coefficient), resulting in reduced available resources for data transmission and causing a loss in system capacity.

An AI technology is introduced into a wireless communication network, to generate an AI model-based CSI feedback mode, that is, AI-CSI feedback. The terminal device uses an AI model to compress and feed back CSI, and the network device uses an AI model to decompress and recover the compressed CSI. A sequence (for example, a bit sequence) is transmitted in AI-based CSI feedback, and overheads are lower than overheads of conventional CSI feedback. In addition, the AI model has a stronger non-linear feature extraction capability, and can more effectively compress and represent channel information and more effectively recover the channel information based on feedback information than a conventional solution.

CSI feedback may be implemented based on an AI model of an AE. FIG. 3 is used as an example. The encoder in FIG. 3 may be a CSI generator, and the decoder in FIG. 3 may be a CSI reconstructor. For example, the encoder may be deployed on the terminal device, and the decoder may be deployed on the network device. Channel information V is encoded by using the encoder to generate CSI feedback information z. The channel information is reconstructed by using the decoder, that is, recovered channel information V' is obtained.

The channel information V may be obtained by measuring the channel information. For example, the channel information V may include an eigenvector matrix (a matrix formed by eigenvectors) of a downlink channel. The encoder processes the eigenvector matrix of the downlink channel to obtain the CSI feedback information z. In other words, performing a compression operation and/or a quantization operation on an eigenvector matrix based on a codebook in a related solution is replaced with an operation of processing the eigenvector matrix by the encoder to obtain the CSI feedback information z. The recovered channel information V' may be obtained by processing the CSI feedback information z by the decoder.

The following further describes examples of a training process and an inference process of an AI model in embodiments of this application.

Training data for training the AI model includes a training sample and a sample label. For example, the training sample is channel information measured by the terminal device, and the sample label is real channel information, for example, ground truth CSI. When an encoder and a decoder belong to a same auto-encoder, the training data may include only the training sample. In other words, the training sample is the sample label.

In the wireless communication field, ground truth CSI may be high-precision CSI.

A specific training process is as follows: A model training node processes channel information, that is, a training sample, by using the encoder, to obtain CSI feedback information, and processes the feedback information by using the decoder, to obtain recovered channel information, that is, CSI recovery information; and then calculates a difference between the CSI recovery information and a corresponding sample label, that is, a value of a loss function, and updates parameters of the encoder and the decoder based on the value of the loss function, to minimize the difference between the recovered channel information and the corresponding sample label, that is, minimize the loss function. For example, the loss function may be a minimum mean square error (mean square error, MSE) or cosine similarity. The foregoing operations may be repeated to obtain an encoder and a decoder that meet a target requirement. The model training node may be the terminal device, the network device, or another network element having an AI function in the communication system. A packet loss of the CSI feedback information affects feedback performance, that is, affects accuracy of channel information recovery on a network device side. The following uses CSI feedback based on time-domain correlation as an example for description.

In a wireless communication link, channels of medium-speed and low-speed users change continuously in time, and feedback performance may be improved by determining time-domain correlation between the channels. For example, channel information is compressed by determining time-domain correlation between a historical channel measurement result and a current channel measurement result. This helps reduce overheads of channel information feedback and reduce an information loss in a compression process. The terminal device and the network device may separately use time-domain correlation to perform compression feedback and recovery of channel information.

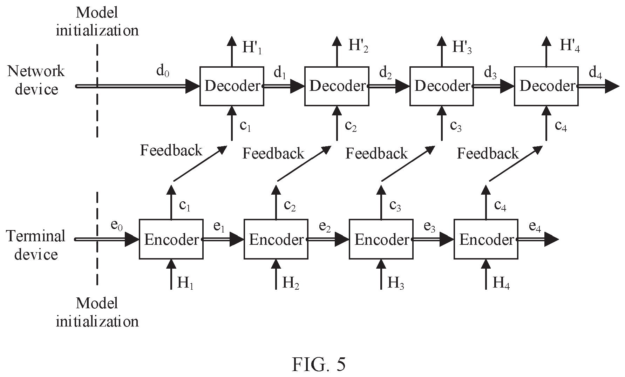

FIG. 5 is a diagram of a CSI feedback procedure based on time-domain correlation. In a CSI feedback scenario based on time-domain correlation, when CSI feedback information is generated on a terminal device side, the CSI feedback information is related to a current channel measurement result, and further related to a channel measurement result at a historical moment; and when channel information is recovered on a network device side, the recovered channel information is related to current CSI feedback information, and further related to CSI feedback information at a historical moment. It may be understood that this application is described by using communication between a terminal device and a network device as an example. However, the solutions in this application are also applicable to wireless communication between another transmitter and another receiver, for example, between a terminal device and a terminal device, or between a network device and a network device. In addition, an AI entity is separately deployed on a transmitter side and a receiver side, and is configured to compress and recover CSI.

A two-side model based on time-domain correlation is deployed on the terminal device and the network device, to implement CSI feedback based on time-domain correlation. The CSI feedback procedure may also be referred to as AI-CSI two-side compression feedback. The following describes the feedback procedure shown in FIG. 5 by using the two-side model shown in FIG. 3 as an example.

On the terminal device side, the terminal device measures a reference signal Rₜ, to obtain a channel measurement result at a current moment. As shown in FIG. 5, the channel measurement result Hₜ at the current moment is input into an encoder, and the encoder outputs CSI feedback information cₜ. The CSI feedback information cₜ is related to the channel measurement result Hₜ at the current moment and status information eₜ₋₁ of the encoder. The status information eₜ₋₁ of the encoder is determined based on a historical input of the encoder. As shown in FIG. 5, the historical input of the encoder may include a channel measurement result at a historical moment. Therefore, time-domain correlation of channel information may be determined based on Hₜ and eₜ₋₁. As shown in FIG. 5, t=1, 2, 3, or 4. On the network device side, the CSI feedback information cₜ at the current moment is input into a decoder, and the decoder outputs CSI recovery information H'ₜ, that is, channel information corresponding to the reference signal Rₜ. The CSI recovery information H'ₜ is related to the CSI feedback information cₜ at the current moment and status information dₜ₋₁ of the decoder. The status information dₜ₋₁ of the decoder is determined based on a historical input of the decoder. As shown in FIG. 5, the historical input of the decoder may include CSI feedback information at a historical moment. Therefore, time-domain correlation of channel information may be determined based on cₜ and dₜ₋₁. To ensure feedback performance, the status information on the network device side and the status information on the terminal device side need to be updated synchronously. As shown in FIG. 5, before the first execution, models of the encoder and the decoder may be initialized, and after initialization, both the status information of the encoder and the status information of the decoder are initial status information, which are respectively represented as e₀ and d₀. In addition, the encoder updates the status information on the terminal device side in addition to outputting the CSI feedback information cₜ, and the decoder further updates the status information on the network device side in addition to outputting the CSI recovery information H'ₜ. In this way, the status information on the network device side and the status information on the terminal device side are updated synchronously.

The following uses an example for description. The network device sends a reference signal R₃ to the terminal device. The terminal device measures the reference signal R₃, to obtain a channel measurement result H₃. The channel measurement result H₃ is input into the encoder of the terminal device. The encoder obtains CSI feedback information c₃ based on the channel measurement result H₃ and status information e₂ of the encoder, and updates the status information of the encoder to obtain status information e₃. The reference signal R₃ is a reference signal corresponding to the CSI feedback information c₃. The network device receives the CSI feedback information c₃, and inputs the CSI feedback information c₃ into the decoder of the network device. The decoder obtains CSI recovery information H'₃ based on the CSI feedback information c₃ and status information d₂ of the decoder, and updates the status information of the decoder to obtain status information d₃. The CSI recovery information H'₃ is channel information corresponding to the CSI feedback information c₃. In other words, the CSI recovery information H'₃ is channel information corresponding to the reference signal R₃. The network device sends a reference signal R₄ to the terminal device. The terminal device measures the reference signal R₄, to obtain a channel measurement result H₄. The channel measurement result H₄ is input into the encoder of the terminal device. The encoder obtains CSI feedback information c₄ based on the channel measurement result H₄ and the status information e₃, and updates the status information to obtain status information e₄. The reference signal R₄ is a reference signal corresponding to the CSI feedback information c₄. The network device receives the CSI feedback information c₄, and inputs the CSI feedback information c₄ into the decoder of the network device. The decoder obtains CSI recovery information H'₄ based on the CSI feedback information c₄ and the status information d₃ of the decoder, and updates the status information of the decoder to obtain status information d₄. The CSI recovery information H'₄ is channel information corresponding to the CSI feedback information c₄. In other words, the CSI recovery information H'₄ is channel information corresponding to the reference signal R₄.

The reference signal R₃ is used as a reference, and a reference signal received by the terminal device before the terminal device receives the reference signal R₃ is a historical reference signal. The reference signal R₄ is used as a reference, and a reference signal received by the terminal device before the terminal device receives the reference signal R₄ is a historical reference signal, for example, R₃. The status information of the encoder is determined based on a historical input of the encoder, and the historical input of the encoder may include a channel measurement result of a historical reference signal. For example, as shown in FIG. 5, the status information e₄ is obtained by updating based on the channel measurement result H₃. The CSI feedback information c₃ is used as a reference, and CSI feedback information received by the network device before the network device receives the CSI feedback information c₃ is historical CSI feedback information. The CSI feedback information c₄ is used as a reference, and CSI feedback information received by the network device before the network device receives the CSI feedback information c₄ is historical CSI feedback information, for example, c₃. The status information of the decoder is determined based on a historical input of the decoder, and the historical input of the decoder may include historical CSI feedback information. For example, as shown in FIG. 5, the status information d₄ is obtained by updating based on the CSI feedback information c₃.

When the CSI feedback information fails to be transmitted due to a poor channel transmission condition or the like, the network device cannot synchronously update the status information on the network device side, causing a difference between the status information on the terminal device side and the status information on the network device side, that is, matching between the encoder and the decoder deteriorates. In other words, when feedback transmission fails, the terminal device can normally update the status information on the terminal device side, but the network device cannot normally update the status information on the network device side because the network device cannot obtain the CSI feedback information. As a result, a quantity of updates of the status information on the network device side is inconsistent with a quantity of updates of the status information on the terminal device side, causing a difference between the status information on the terminal device side and the status information on the network device side, that is, matching between the encoder and the decoder deteriorates.

The difference between the status information on the terminal device side and the status information on the network device side causes the decoder to fail to recover accurate channel information, resulting in a performance loss. In addition, the difference between the status information on the terminal device side and the status information on the network device side increases with an increase in a quantity of packet losses, which may cause a mismatch in a subsequent two-side processing process, and further cause continuous deterioration of feedback performance.

When CSI feedback transmission fails, for example, when the CSI feedback information is frequently lost, the network device may trigger resetting of the status information of the AI model (that is, the encoder) on the terminal device side, for example, trigger resetting of the status information of the AI model on the terminal device side to the initial status information e₀.

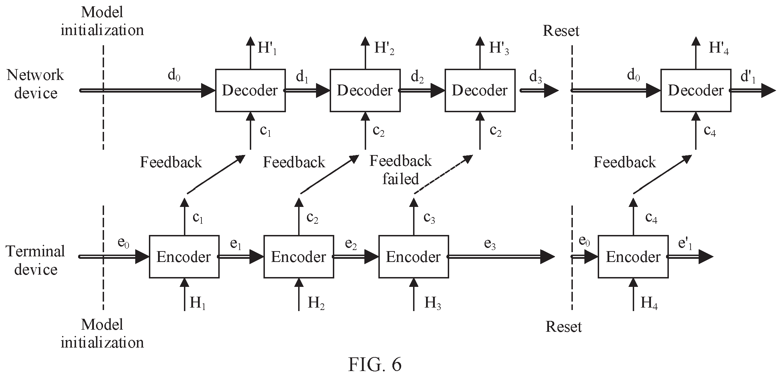

FIG. 6 is a diagram of another CSI feedback procedure based on time-domain correlation. As shown in FIG. 6, when feedback transmission fails, the decoder may perform processing based on CSI feedback information received last time. For example, when the CSI feedback information c₃ fails to be reported, the network device inputs, into the decoder, the CSI feedback information c₂ received last time. The decoder outputs CSI recovery information H'₃ based on the CSI feedback information c₂ and the status information d₂. Because the CSI feedback information c₃ is not received, the network device cannot normally update the status information. Status information d₃ of the decoder and subsequent status information of the decoder in FIG. 6 are different from the status information d₃ obtained by updating based on the CSI feedback information c₃ and subsequent status information of the decoder in FIG. 5. The decoded CSI recovery information H'₃ and subsequent CSI recovery information in FIG. 6 are different from the CSI recovery information H'₃ and subsequent CSI recovery information in FIG. 5. Accuracy of the decoded CSI recovery information H'₃ and the subsequent CSI recovery information in FIG. 6 is lower than that of the CSI recovery information H'₃ and the subsequent CSI recovery information in FIG. 5.

When CSI feedback transmission fails frequently, the network device triggers the status information of the encoder on the terminal device side to be reset to the initial status information e₀ of the encoder. Correspondingly, the status information of the decoder is also reset to the initial status information d₀ of the decoder.

The network device sends a reference signal R₄ to the terminal device. The terminal device measures the reference signal R₄ to obtain a channel measurement result H₄. The channel measurement result H₄ is input into the encoder. In this case, the status information of the encoder has been reset. The encoder outputs CSI feedback information c₄ based on the channel measurement result H₄ and the status information e₀, and updates the status information e₀ to obtain status information e₁'. The status information e₁' may be used in a next CSI feedback procedure. The terminal device sends the CSI feedback information c₄ to the network device. The network device inputs the CSI feedback information c₄ into the decoder. In this case, the status information of the decoder has been reset. The decoder outputs CSI recovery information H'₄ based on the CSI feedback information c₄ and the status information d₀, and updates the status information d₀ to obtain status information d₁'. The status information d₁' may be used in a next CSI feedback procedure.

However, if the terminal device has an unfinished CSI feedback task before the status information of the model is reset, a conflict may occur between different tasks, affecting feedback performance. For example, if the network device sends indication information to trigger resetting of the status information of the model on the terminal device side, and has not received CSI feedback information corresponding to one or more reference signals, when subsequently receiving the one or more pieces of CSI feedback information, the network device cannot determine whether the one or more pieces of CSI feedback information are generated before or after the status information of the model is reset. Consequently, feedback performance is affected.

In view of this, this application provides a communication method and a communication apparatus, to help improve robustness of performance of an AI model or a decoder on a side on which channel information is recovered, for example, an AI model on a network device side, in recovering the channel information. The communication method may be applied to the foregoing communication system, for example, an FDD communication scenario. In addition, optionally, the communication method may be further applied to a TDD communication scenario. This is not limited in the present disclosure.

It should be understood that, in this application, an indication includes a direct indication (also referred to as an explicit indication) and an implicit indication. Directly indicating information A means including the information A. Implicitly indicating information A means indicating the information A by using a correspondence between the information A and information B and directly indicating the information B. The correspondence between the information A and the information B may be predefined, prestored, pre-burned, or preconfigured.

It should be understood that, in this application, that information C is used to determine information D includes that the information D is determined based only on the information C, and also includes that the information D is determined based on the information C and other information. In addition, that the information C is used to determine the information D may further include an indirect determining case, for example, the information D is determined based on information E, and the information E is determined based on the information C.

In addition, "a network element A sends information A to a network element B" in embodiments of this application may be understood as that a destination end of the information A or an intermediate network element on a transmission path between the destination end and the network element A is the network element B, and may include directly or indirectly sending information to the network element B. That "a network element B receives information A from a network element A" may be understood as that a source end of the information A or an intermediate network element in a transmission path between the network element B and the source end is the network element A, and may include directly or indirectly receiving information from the network element A. Necessary processing, such as a format change, may be performed on information between a source end and a destination end for information sending. However, the destination end may understand valid information from the source end. Similar descriptions in this application may be understood similarly. Details are not described herein.

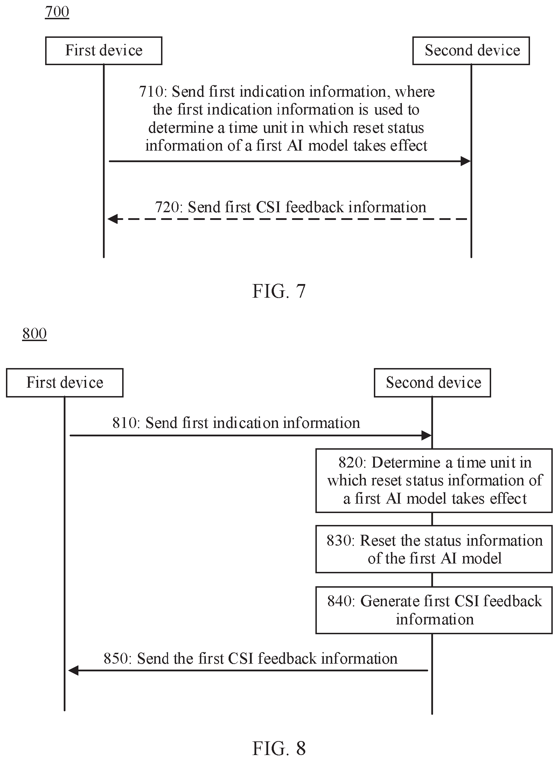

FIG. 7 is a schematic flowchart of a communication method according to this application.

A method 700 shown in FIG. 7 may be applied to a CSI feedback scenario based on time-domain correlation.

In the feedback scenario based on time-domain correlation, CSI feedback information corresponding to a reference signal is determined based on a channel measurement result of the reference signal and a channel measurement result of a historical reference signal relative to the reference signal. A historical reference signal relative to one reference signal includes a reference signal received by a terminal device before the terminal device receives the one reference signal. CSI recovery information corresponding to the CSI feedback information is determined based on the CSI feedback information and historical CSI feedback information relative to the CSI feedback information. Historical CSI feedback information relative to one piece of CSI feedback information includes CSI feedback information received by a network device before the network device receives the one piece of CSI feedback information.

In other words, the generated CSI feedback information of the reference signal is related to a channel measurement result at a current moment (that is, a measurement result of the reference signal), and further to a channel measurement result at a past moment. Recovered channel information of a reference signal is related not only to currently received CSI feedback information (that is, CSI feedback information corresponding to the reference signal), but also to CSI feedback information received at a past moment.

CSI feedback based on time-domain correlation may be implemented through AI-CSI two-side compression feedback.

Specifically, a two-side model based on time-domain correlation is deployed on two devices, to implement CSI feedback. The two-side model based on time-domain correlation includes a first AI model and a second AI model. For example, the first AI model may be an AI model in an encoder, and the second AI model may be an AI model in a decoder. The first AI model may alternatively be replaced with an encoder, and the second AI model may alternatively be replaced with a decoder. That is, a model inference phase corresponding to the encoder is performed in the second device, and a model inference phase corresponding to the decoder is performed in a third device. The first AI model and the second AI model are matched.

For example, an architecture design of a two-side model may use any one of a transformer (Transformer), an RNN, a CNN, or a long short-term memory (long short-term memory, LSTM) network. Alternatively, the two-side model may be another AI model that is self-constructed.

To better describe the solutions in embodiments of this application, the following first describes a CSI feedback procedure based on time-domain correlation by using the first AI model and the second AI model as an example.

An output of the first AI model is related to an input of the first AI model and status information of the first AI model. An output of the second AI model is related to an input of the second AI model and status information of the second AI model.

The output of the first AI model includes CSI feedback information corresponding to a reference signal, or the CSI feedback information is based on the output of the first AI model. For example, quantization processing is performed on an output result of the first AI model, to obtain the CSI feedback information corresponding to the reference signal. For ease of description, in embodiments of this application, an example in which the output of the first AI model includes the CSI feedback information is mainly used for description. This does not constitute a limitation on the solutions in embodiments of this application.

The reference signal may be one or more of a CSI-RS, an SSB, or a DMRS.

For example, the reference signal may be a reference signal sent periodically, or may be a reference signal sent aperiodically.

The output of the second AI model includes CSI recovery information corresponding to the CSI feedback information.

To be specific, the CSI feedback information is related to the input of the first AI model and the status information of the first AI model, and the CSI recovery information corresponding to the CSI feedback information is related to the input of the second AI model and the status information of the second AI model.

The input of the first AI model includes a channel measurement result.

The input of the second AI model includes the CSI feedback information. Alternatively, the input of the second AI model is determined based on the CSI feedback information. For example, the CSI feedback information may be obtained by performing quantization processing on the output result of the first AI model. Before the CSI feedback information is input into the second AI model, dequantization processing may be performed on the CSI feedback information. For ease of description, in embodiments of this application, an example in which the input of the second AI model includes the CSI feedback information is mainly used for description. This does not constitute a limitation on the solutions in embodiments of this application.

The status information of the first AI model is determined based on a historical input of the first AI model. Alternatively, the status information of the first AI model is initial status information of the first AI model.

For example, if the first AI model has no historical input currently, that is, a CSI feedback task is executed for the first time, the first AI model may be initialized, and status information of the initialized first AI model may be the initial status information.

The status information of the first AI model may be determined based on one or more historical inputs of the first AI model.

For example, current status information of the first AI model may be determined based on historical inputs accumulated (accumulated) starting from the initial status information of the first AI model.

For another example, if the status information of the first AI model has been reset, current status information of the first AI model may be determined based on historical inputs accumulated starting from latest reset status information of the first AI model.

A channel measurement result of a reference signal currently input to the first AI model is further used to update the current status information of the first AI model, to be used for a next CSI feedback task.

The status information of the second AI model is determined based on a historical input of the second AI model. Alternatively, the status information of the second AI model is initial status information of the second AI model.

For example, if the second AI model has no historical input currently, that is, a CSI feedback task is executed for the first time, the second AI model may be initialized, and status information of the initialized second AI model is the initial status information.

The status information of the second AI model may be determined based on one or more historical inputs of the second AI model.

For example, current status information of the second AI model may be determined based on historical inputs accumulated starting from the initial status information of the second AI model.

For another example, if the status information of the second AI model has been reset, current status information of the second AI model may be determined based on historical inputs accumulated starting from latest reset status information of the second AI model.

CSI feedback information currently input to the second AI model is further used to update the current status information of the second AI model, to be used for a next CSI feedback task.

The output of the first AI model is related to a current input and current status information of the first AI model.

A reference signal is used as an example. The current input includes a channel measurement result of the reference signal. The current status information of the first AI model is determined based on a historical input of the first AI model. If the status information of the first AI model has not been reset, the current status information of the first AI model may be determined based on channel measurement results of historical reference signals, received before a receiving moment of the reference signal, that are accumulated starting from the initial status information of the first AI model. Alternatively, the current status information of the first AI model may be the initial status information.

The output of the second AI model is related to a current input and current status information of the second AI model.

A reference signal is used as an example. When the second AI model obtains CSI feedback information corresponding to the reference signal, the current input of the second AI model includes the CSI feedback information corresponding to the reference signal. Alternatively, the current input of the second AI model is determined based on the CSI feedback information corresponding to the reference signal. The output of the second AI model includes CSI recovery information corresponding to the CSI feedback information. The current status information of the second AI model is determined based on a historical input of the second AI model. If the status information of the second AI model has not been reset, the current status information of the second AI model may be determined based on historical CSI feedback information, received before a receiving moment of the CSI feedback information, that is accumulated starting from the initial status information of the second AI model. Alternatively, the current status information of the second AI model may be the initial status information.

A reference signal is used as an example. When the second AI model cannot obtain CSI feedback information corresponding to the reference signal, for example, when the network device does not receive the CSI feedback information at an expected receiving moment of the CSI feedback information corresponding to the reference signal, that is, the current CSI feedback information fails to be reported, the current input of the second AI model may include the last piece of historical CSI feedback information received before an expected receiving moment of the CSI feedback information corresponding to the reference signal, that is, CSI feedback information received last time, and the output of the second AI model includes CSI recovery information corresponding to the CSI feedback information that fails to be reported. The current status information of the second AI model is determined based on a historical input of the second AI model. The historical input includes historical CSI feedback information received before the expected receiving moment of the CSI feedback information.

It is assumed that three consecutive reference signals that are sequentially sent in a time sequence are respectively a reference signal #a, a reference signal #b, and a reference signal #c. The reference signal #b is a current reference signal.

A channel measurement result of the current reference signal (that is, the reference signal #b) is input into the first AI model. The first AI model obtains, based on the channel measurement result of the reference signal #b and current status information (for example, status information #b1) of the first AI model, CSI feedback information corresponding to the reference signal #b, and updates the status information of the first AI model. The updated status information (for example, status information #c1) is used to generate CSI feedback information corresponding to the reference signal #c. The status information #b1 is obtained by updating, by the first AI model, status information #a1 based on a channel measurement result of the reference signal #a. The status information #a1 is status information of the first AI model before CSI feedback information corresponding to the reference signal #a is generated.

When the second AI model obtains the CSI feedback information corresponding to the current reference signal (that is, the reference signal #b), the CSI feedback information corresponding to the reference signal #b is input into the second AI model. The second AI model recovers channel information based on the CSI feedback information corresponding to the reference signal #b and current status information (for example, status information #b2) of the second AI model, and updates the status information of the second AI model. The updated status information (for example, status information #c2') may be used to recover channel information corresponding to the reference signal #c. The status information #b2 is obtained by updating, by the second AI model, status information #a2 based on the CSI feedback information corresponding to the reference signal #a. The status information #a2 is status information of the second AI model before the channel information corresponding to the reference signal #b is recovered.

When the second AI model cannot obtain the CSI feedback information corresponding to the current reference signal (that is, the reference signal #b), the CSI feedback information corresponding to the reference signal #a is input into the second AI model. The second AI model recovers, based on the CSI feedback information corresponding to the reference signal #a and the current status information (for example, the status information #b2) of the second AI model, channel information corresponding to the reference signal #b, and updates the status information of the second AI model. The updated status information (for example, status information #c2) may be used to recover channel information corresponding to the reference signal #c. The status information #b2 is obtained by updating, by the second AI model, the status information #a2 based on the CSI feedback information corresponding to the reference signal #a. The status information #a2 is status information of the second AI model before the channel information corresponding to the reference signal #b is recovered.

For an example of the CSI feedback procedure based on time-domain correlation, refer to FIG. 5. Details are not described herein again.

The second device is a device on a first AI model side.

Optionally, the second device may be an AI entity. The first AI model may be deployed on the second device.

For example, the AI entity may be an AI entity on a terminal device side, and the terminal device side includes a terminal device, or another device that communicates with the terminal device, for example, a device that is controlled by the terminal device or a device that serves the terminal device. The AI entity may be the terminal device, or an AI entity that communicates with the terminal device. For example, the second device may be a server such as an OTT server or a cloud server.

The first device and the third device are devices on a second AI model side.

The third device may be an AI entity. The second AI model may be deployed on the third device.

For example, the AI entity may be an AI entity on a network device side, and the first device and the third device are devices on the network device side. The network device side includes a network device, or another device that communicates with the network device, for example, a device that is controlled by the network device or a device that serves the network device. The AI entity may be the network device, or an AI entity that communicates with the network device. For example, the third device may be an RIC, an OAM, or a server such as an OTT server or a cloud server. The near-real-time RIC is disposed in a RAN node, for example, a CU/DU.

The first device and the third device in the method 700 may be a same device, or may be different devices.

For example, the second device is a terminal device, and the first device and the third device may be a same network device.

As shown in FIG. 7, the method 700 may include the following steps.

710: The first device sends first indication information to the second device. The first indication information is used to determine a time unit in which reset status information of the first AI model takes effect.

That the first device sends information to the second device may be that the first device directly sends the information to the second device, or the first device sends the information to the second device through forwarding via another device.

That the second device sends information to the first device may be that the second device directly sends the information to the first device, or the second device sends the information to the first device through forwarding via another device.

For example, the first device may be a network device, and the second device may be a terminal device. In this case, the second AI model may be deployed in the network device, or may be deployed in an AI entity that communicates with the network device.

For example, the first device may be an AI entity (for example, a near-real-time RIC) that communicates with the network device, and the second device may be a terminal device. The network device and the terminal device may communicate with each other. In this case, the second AI model may be deployed in the AI entity that communicates with the network device.

For example, the first device may be a network device, and the second device may be an AI entity (for example, an OTT server or a cloud server) that communicates with a terminal device. In this case, the second AI model may be deployed in the network device, or may be deployed in an AI entity that communicates with the network device. The network device may directly send the first indication information to an AI entity that communicates with the terminal device. Alternatively, the AI entity that communicates with the terminal device may obtain the first indication information from the network device through forwarding via another device. For example, the second device may obtain the indication information from the network device through forwarding via the terminal device.

For example, the first device may be an AI entity (for example, a near-real-time RIC) that communicates with a network device, and the second device may be an AI entity (for example, an OTT server or a cloud server) that communicates with a terminal device. The network device and the terminal device may communicate with each other. In this case, the second AI model may be deployed in the AI entity that communicates with the network device. The AI entity that communicates with the network device may directly send the first indication information to the AI entity that communicates with the terminal device. Alternatively, the AI entity that communicates with the terminal device may obtain the first indication information from the AI entity that communicates with the network device through forwarding via another device.

That the reset status information of the first AI model takes effect may also be understood as that the reset status information of the first AI model is applied.

In some possible implementations, the time unit in which the reset status information of the first AI model takes effect may also be understood as a time unit in which a reset operation on the status information of the first AI model ends, or a time unit in which resetting of the status information of the first AI model is completed.

The time unit may also be referred to as a moment. For example, the time unit in which the reset status information of the first AI model takes effect may also be referred to as a moment at which the reset status information of the first AI model takes effect.

For example, the time unit may include any one of the following: a slot, a subframe, a symbol, a TTI, or the like.

Alternatively, the time unit may be a non-air interface time unit, for example, a time unit in wired transmission.

For example, the time unit may include any one of the following: nanosecond, microsecond, millisecond, or the like.

For specific descriptions of the AI model, refer to the foregoing descriptions. Details are not described herein again.

The status information of the AI model may also be referred to as any one or more of the following: cache information related to the AI model, storage information related to the AI model, intermediate information (for example, intermediate information generated by the AI model), internal information (for example, internal information of a device deployed with the AI model or internal information of the AI model), and parameter information generated or updated by the AI model.

The first AI model may be used to generate CSI feedback information. The second AI model that matches the first AI model may be used to recover channel information corresponding to the CSI feedback information. For a specific generation process and a specific recovery process, refer to the foregoing descriptions of the encoder and the decoder. Details are not described herein again.

The CSI feedback information may also be referred to as a CSI feedback bit. The CSI feedback information is indicated by a CSI report. For ease of description, in embodiments of this application, the CSI feedback information may also be referred to as feedback information for short. One piece of feedback information corresponds to one CSI report.

The second device may determine, based on the first indication information, the time unit in which the reset status information of the first AI model takes effect, and process a CSI feedback task based on the time unit. For example, the second device determines whether output CSI feedback information is based on the reset status information or status information before the reset.

For example, the second device may generate the CSI feedback information by applying the reset status information of the first AI model in the time unit or in a time unit after the time unit, and report the CSI feedback information.

In this way, the third device can decode the CSI feedback information by using status information of the second AI model that matches the status information of the first AI model, thereby helping ensure feedback performance, and further improving decoding performance of the second AI model, that is, a decoder. That is, if the CSI feedback information is generated when the reset status information of the first AI model takes effect, the third device may recover, by using reset status information of the second AI model, channel information corresponding to the CSI feedback information. If the CSI feedback information is generated when the reset status information of the first AI model does not take effect, the third device may recover, by using status information of the second AI model before the reset, channel information corresponding to the CSI feedback information.

For example, the third device and the first device may be a same device. The first device sends the first indication information to the second device, so that the second device may determine, based on an indication of the first device, the time unit in which the reset status information of the first AI model takes effect, so that the first device and the second device can align time in which the status information of the first AI model takes effect. In this way, the first device can determine whether the CSI feedback information is generated when the reset status information of the first AI model takes effect, and further decode the CSI feedback information by using the status information of the second AI model that matches the status information of the first AI model, thereby helping improve performance of the second AI model in recovering the channel information.

Alternatively, if the third device and the first device are different devices, the first device sends the first indication information to the second device, so that the second device may determine, based on an indication of the first device, the time unit in which the reset status information of the first AI model takes effect, so that the first device and the second device can align time in which the status information of the first AI model takes effect. The first device may send the indication information to the third device. For example, the first device may indicate, to the third device, the time unit in which the reset status information of the first AI model takes effect, the first device may indicate the third device to recover, by using reset status information of the second AI model or status information of the second AI model before the reset, the channel information corresponding to the CSI feedback information, or the first device may indicate, to the third device, a time unit in which reset status information of the second AI model takes effect. In this way, the third device can decode the CSI feedback information by using the status information of the second AI model that matches the status information of the first AI model, thereby helping improve performance of the second AI model in recovering the channel information.

In a possible implementation, the method 700 may be applied to a scenario in which CSI feedback information fails to be reported. That the CSI feedback information fails to be reported means that a packet loss occurs in the CSI feedback information, and the network device does not obtain the CSI feedback information sent by the terminal device.

That is, in the scenario in which the CSI feedback information fails to be reported, the first device may send the first indication information to the second device, so that the second device may determine the time unit in which the reset status information of the first AI model takes effect, and complete resetting based on the time unit.

For example, after a quantity of packet losses of the CSI feedback information reaches a specified threshold, the first device may send the first indication information to the second device.

The reset status information of the first AI model matches the reset status information of the second AI model.

For example, the reset status information of the first AI model may be any status information of the first AI model in the CSI feedback procedure, and the reset status information of the second AI model may be status information of the second AI model that matches the reset status information of the first AI model in the CSI feedback procedure. Alternatively, the reset status information of the second AI model may be any status information of the second AI model in the CSI feedback procedure, and the reset status information of the first AI model may be status information of the first AI model that matches the reset status information of the second AI model in the CSI feedback procedure.

Both the reset status information of the first AI model and the reset status information of the second AI model may be initial status information of the respective AI models. Alternatively, the reset status information of the first AI model and the reset status information of the second AI model may be based on corresponding historical information.

For example, the reset status information of the first AI model is based on a channel measurement result of a historical reference signal, and the reset status information of the second AI model is based on CSI feedback information corresponding to the historical reference signal. The historical reference signal may be a historical reference signal relative to the reference signal #A.

There may be one or more historical reference signals. The reset status information of the first AI model may be based on channel measurement results of a plurality of historical reference signals that are accumulated starting from the initial status information of the first AI model. For example, the reset status information of the first AI model may be based on channel measurement results of all historical reference signals that are sent before the reference signal #A and that are accumulated starting from the initial status information of the first AI model. The reset status information of the second AI model may be based on CSI feedback results corresponding to a plurality of historical reference signals that are accumulated starting from the initial status information of the second AI model. For example, the reset status information of the second AI model may be based on channel measurement results corresponding to all historical reference signals that are sent before the reference signal #A and that are accumulated starting from the initial status information of the second AI model.

FIG. 5 is used as an example. For example, the reset status information of the first AI model may be e₁, and the reset status information of the second AI model may be d₁. For another example, the reset status information of the first AI model may be e₂, and the reset status information of the second AI model may be d₂. For another example, the reset status information of the first AI model may be e₀, and the reset status information of the second AI model may be d₀.

For example, the method 700 may be applied to a scenario in which CSI feedback information fails to be reported. In this case, the reset status information of the first AI model may be status information of the first AI model before the CSI feedback information fails to be reported, and the reset status information of the second AI model may be status information of the second AI model before the CSI feedback information is reported. FIG. 6 is used as an example. The reset status information of the first AI model may be any one of e₀, e₁, or e₂, and the reset status information of the second AI model may be any one of d₀, d₁, or d₂ that matches the reset status information of the first AI model. In FIG. 6, an example in which the reset status information of the first AI model is e₀ and the reset status information of the second AI model is d₀ is merely used for description. This does not constitute a limitation on the solutions in embodiments of this application.

That is, when the CSI feedback information fails to be reported, the status information of the first AI model may be reset to status information of the first AI model before the CSI feedback information fails to be reported, and the status information of the second AI model may be reset to status information of the second AI model before the CSI feedback information fails to be reported.

For specific descriptions of a resetting process in the scenario in which the CSI feedback information fails to be reported, refer to descriptions in FIG. 6. To avoid repetition, details are not described herein again.

The reset status information of the first AI model and the reset status information of the second AI model may be determined in a plurality of manners.

The reset status information of the first AI model may be predefined, preconfigured, or determined by the second device, or may be indicated by another device, for example, indicated by the first device.

For example, the second device receives indication information, where the indication information indicates an identifier of the status information of the first AI model.

The second device may determine, based on the indication information, the status information of the first AI model corresponding to the identifier as the reset status information of the first AI model.

For another example, the second device receives indication information, where the indication information indicates an identifier of the status information of the second AI model.

The second device may determine, based on the indication information, the status information of the first AI model that matches the status information of the second AI model corresponding to the identifier as the reset status information of the first AI model.

For another example, the second device receives indication information, where the indication information indicates a moment of the status information of the first AI model.

The second device may determine, based on the indication information, the status information of the first AI model at the moment as the reset status information of the first AI model.

For example, the reset status information of the second AI model may be predefined, preconfigured, or determined by the third device, or may be indicated by another device, for example, indicated by the second device.

For example, the third device receives indication information, where the indication information may indicate any one of the following: an identifier of the status information of the second AI model, an identifier of the status information of the first AI model, or a moment of the status information of the second AI model.

For a manner of determining the reset status information of the second AI model, refer to the manner of determining the reset status information of the first AI model. Details are not described herein again.

The manner of determining the reset status information of the first AI model and the manner of determining the reset status information of the second AI model are not limited in embodiments of this application, provided that the two pieces of status information match each other.

In the solutions in embodiments of this application, the status information of the first AI model is reset, so that consistency between the status information of the first AI model and the status information of the second AI model can be ensured. For example, the status information of the first AI model and the status information of the second AI model are reset to matched status information. This helps ensure accuracy of recovered channel information, and helps improve robustness of performance of the second AI model in recovering the channel information. For example, when the CSI feedback information is lost, the status information of the first AI model and the status information of the second AI model are reset, to restore consistency between the status information of the first AI model and the status information of the second AI model, thereby helping improve accuracy of the recovered channel information.

In addition, in the solutions in embodiments of this application, the first indication information may be sent to the first AI model side (that is, the second device), so that the first AI model side may determine the time unit in which the reset status information of the first AI model takes effect. In this way, effective time of the reset status information of the first AI model is consistent with effective time of the reset status information of the second AI model, thereby further improving performance of the second AI model in recovering the channel information. For example, before the status information of the first AI model is indicated to be reset, there may be a CSI feedback task that has not been completed, and a conflict may occur between the CSI feedback task that has not been completed and resetting of the status information. As a result, it is difficult for the second AI model side (that is, the third device) to determine whether the received CSI feedback information is obtained based on the reset status information of the first AI model, and the status information of the second AI model and the status information of the first AI model may not be reset synchronously, affecting accuracy of the recovered channel information. According to the solutions in embodiments of this application, the second device may determine, based on the first indication information, the time unit in which the reset status information of the first AI model takes effect, so that the first AI model side and the second AI model side may align effective time of the status information. This helps the second AI model side determine whether the CSI feedback information is generated when the reset status information takes effect, and further helps recover the channel information based on the corresponding status information, thereby helping ensure long-term feedback performance of an AI space-frequency time codebook.

Optionally, the method 700 may further include step 720.

720: The second device sends first CSI feedback information to the first device.

Optionally, step 720 may include: The second device sends the first CSI feedback information to the first device in a first time unit. The first CSI feedback information is related to the reset status information of the first AI model. The first time unit is not earlier than the time unit in which the reset status information of the first AI model takes effect.

For example, the second device may be a terminal device, and the first device may be a network device. The terminal device may send the first CSI feedback information to the network device in the first time unit.

For example, that the second device sends the first CSI feedback information to the first device may be that the second device sends the first CSI feedback information to the first device through forwarding via another device.

For example, the second device may be an entity that communicates with the terminal device, and the first device may be a network device. The terminal device may obtain the first CSI feedback information from the second device, and send the first CSI feedback information to the network device in the first time unit.

That the first time unit is not earlier than the time unit in which the reset status information of the first AI model takes effect may include: The first time unit is later than the time unit in which the reset status information of the first AI model takes effect, and/or the first time unit includes the time unit in which the reset status information of the first AI model takes effect.

In embodiments of this application, that A is not earlier than B may also be referred to as that B is not later than A.

In embodiments of this application, that A is later than B may also be referred to as that A is after B, B is earlier than A, or B is before A.

After receiving the first indication information, the second device may determine a time unit in which reset status information of an encoder takes effect. A sending moment of the first CSI feedback information, that is, the first time unit, is not earlier than the time unit in which the reset status information of the first AI model takes effect. When the status information of the first AI model takes effect, the second device may generate the first CSI feedback information by using the reset status information of the encoder, and send the first CSI feedback information in the first time unit.

An input of the first AI model includes a channel measurement result of a first reference signal. The first reference signal corresponds to the first CSI feedback information. The first CSI feedback information is an output of the first AI model or an output based on the first AI model. For example, quantization processing is performed on an output result of the first AI model, to obtain the first CSI feedback information.

The output of the first AI model is related to the measurement result of the first reference signal and the reset status information of the first AI model. The reset status information of the first AI model may be initial status information, or the reset status information of the first AI model may be based on a channel measurement result of a historical reference signal. The historical reference signal may be a historical reference signal relative to a reference signal #A. A sending moment of the reference signal #A is earlier than a sending moment of the first reference signal.

Specifically, the channel measurement result of the first reference signal is input into the first AI model. The first AI model may output the first CSI feedback information based on the channel measurement result of the first reference signal and the reset status information of the first AI model. Alternatively, the output of the first AI model is processed to obtain the first CSI feedback information.

Correspondingly, CSI recovery information corresponding to the first CSI feedback information may be related to the reset status information of the second AI model. The second AI model side may recover, based on the reset status information of the second AI model, channel information corresponding to the first CSI feedback information.

An input of the second AI model includes the first CSI feedback information. Alternatively, the input of the second AI model is based on the first CSI feedback information. For example, the input of the second AI model includes a processing result of performing dequantization processing on the first CSI feedback information.

An output of the second AI model includes the CSI recovery information corresponding to the first CSI feedback information. The output of the second AI model is related to the first CSI feedback information and the reset status information of the second AI model. The reset status information of the second AI model may be initial status information, or the reset status information of the second AI model is based on CSI feedback information corresponding to a historical reference signal. The historical reference signal may be a historical reference signal relative to the reference signal #A. The sending moment of the reference signal #A is earlier than the sending moment of the first reference signal.

Specifically, the first CSI feedback information is input into the second AI model. Alternatively, the first CSI feedback information is processed and then input into the second AI model. The second AI model may output, based on the first CSI feedback information and the reset status information of the second AI model, the CSI recovery information corresponding to the first CSI feedback information.

For related descriptions of CSI feedback performed based on a two-side model, refer to the foregoing descriptions. Details are not described herein again.

In the solutions of embodiments of this application, the first indication information may be sent to the first AI model side, so that the first AI model side (that is, the second device) may determine that the time unit in which the reset status information of the first AI model takes effect is not later than the sending moment of the first CSI feedback information (that is, the first time unit). The first AI model side may generate the first CSI feedback information by using the reset status information of the first AI model before the first CSI feedback information is sent. In this way, the second AI model side, for example, the network device side, may determine that the first CSI feedback information is generated when the reset status information takes effect, and may further recover, based on the reset status information of the second AI model, the channel information corresponding to the first CSI feedback information. This helps ensure accuracy of the recovered channel information, and improves performance of the second AI model in recovering the channel information.

Further, a time interval between the first time unit and the time unit in which the reset status information of the first AI model takes effect is greater than or equal to processing time of the first AI model.

The processing time of the first AI model may alternatively be replaced with processing time of the terminal device, CSI processing time, CSI calculation time, or the like. For example, the processing time of the first AI model may include duration required for generating the CSI feedback information through processing of the first AI model.

In this way, it is ensured that the second device can have sufficient time to generate the first CSI feedback information based on the reset status information of the first AI model.

The second device may determine, in a plurality of manners, the time unit in which the reset status information of the first AI model takes effect. The following provides descriptions.

In a first possible implementation, the first indication information indicates to send uplink information on a first time resource. The time unit in which the reset status information of the first AI model takes effect is not later than a start moment of the first time resource.

After receiving the first indication information, the second device may determine to send the uplink information on the first time resource, and enable the reset status information of the first AI model to take effect before sending the uplink information.

A time resource may include one or more time units. A start moment of the time resource may be understood as start time of a start time unit in the time resource.

That the time unit in which the reset status information of the first AI model takes effect is not later than the start moment of the first time resource may include: The time unit in which the reset status information of the first AI model takes effect is earlier than the start moment of the first time resource, and/or the time unit in which the reset status information of the first AI model takes effect is the start moment of the first time resource.

Optionally, the first time resource may include the first time unit. In other words, the first time resource may include a resource used to transmit the first CSI feedback information, that is, the uplink information sent on the first time resource may include the first CSI feedback information.

For example, the first indication information may indicate to send the first CSI feedback information in the first time unit.

After receiving the first indication information, the second device may determine to send the first CSI feedback information in the first time unit, and enable the reset status information of the first AI model to take effect before sending the first CSI feedback information. In this way, the first CSI feedback information may be generated based on the reset status information of the first AI model.

The uplink information sent on the first time resource may also include uplink information other than the first CSI feedback information. Content of the uplink information is not limited in embodiments of this application.

Optionally, the method 700 may further include: The second device determines a time period #1 (an example of a first time period). An end moment of the time period #1 is not later than the start moment of the first time resource.

That the end moment of the time period #1 is not later than the start moment of the first time resource may include: The end moment of the time period #1 is the start moment of the first time resource.

In this case, the second device may determine the time period #1, and determine the first time resource based on the time period #1, that is, the end moment of the time period #1 is not later than the start moment of the first time resource. Further, the second device determines, based on the first time resource, the time unit in which the reset status information of the first AI model takes effect, that is, the time unit in which the reset status information of the first AI model takes effect is not later than the start moment of the first time resource.

That the time unit in which the reset status information of the first AI model takes effect is not later than the start moment of the first time resource may include: The time unit in which the reset status information of the first AI model takes effect is the start moment of the first time resource.

Further, the second device may determine the time period #1 based on any two of the following: a start moment of the time period #1, a length of the time period #1, or an end moment of the time period #1.

The length of the time period #1 may also be referred to as first duration or a first offset.

For example, the length of the time period #1 may be predefined.

Alternatively, the length of the time period #1 may be indicated by the first indication information.

Alternatively, the length of the time period #1 may be indicated by indication information (for example, fourth indication information) other than the first indication information. That is, the first device may send the fourth indication information to the second device, where the fourth indication information indicates the length of the time period #1.

Optionally, the first indication information may indicate the first time resource.

For example, the first indication information may be scheduling information of the first CSI feedback information, and the scheduling information indicates a time resource for the first CSI feedback information. The time resource for the first CSI feedback information may indicate sending time of the first CSI feedback information, that is, the first time unit.

A time resource may be replaced with a time domain resource.

In this case, after receiving the first indication information, the second device may determine the first time resource, and determine, based on the first time resource, the time unit in which the reset status information of the first AI model takes effect, that is, the time unit in which the reset status information of the first AI model takes effect is not later than the start moment of the first time resource.

In a second possible implementation, a time period #2 (another example of the first time period) may be used to determine the time unit in which the reset status information of the first AI model takes effect.

The second device may determine, based on the time period #2, the time unit in which the reset status information of the first AI model takes effect.

For example, the time period #2 may include the time unit in which the reset status information of the first AI model takes effect.

In other words, the time unit in which the reset status information of the first AI model takes effect is within the time period #2.

For example, the time unit in which the reset status information of the first AI model takes effect may be an end moment of the time period #2. The second device may enable the reset status information of the first AI model to take effect at the end moment of the time period #2. For example, the second device may complete resetting of the status information of the first AI model at the end moment of the time period #2.

For another example, the time unit in which the reset status information of the first AI model takes effect may be earlier than an end moment of the time period #2. The second device may complete resetting of the status information of the first AI model before the end moment of the time period #2.

For another example, the time unit in which the reset status information of the first AI model takes effect is an end moment of the time period #2 at the latest. The second device may complete resetting of the status information of the first AI model at the end moment of the time period #2 at the latest. In this case, the end moment of the time period #2 may be understood as a deadline moment at which resetting of the status information of the first AI model is completed.

Alternatively, the time unit in which the reset status information of the first AI model takes effect may not be later than a start moment of the time period #2.

Alternatively, the time unit in which the reset status information of the first AI model takes effect may not be earlier than an end moment of the time period #2.

In embodiments of this application, an example in which the time unit in which the reset status information of the first AI model takes effect is within the time period #2 is mainly used for description. This does not constitute a limitation on the solutions in embodiments of this application.

The second device may determine the time period #2 based on any two of the following: the start moment of the time period #2, duration of the time period #2, or the end moment of the time period #2.

Optionally, the method 700 may further include: obtaining the length of the time period #2. The length of the time period #2 is used to determine the time unit in which the reset status information of the first AI model takes effect.

The length of the time period #2 may also be referred to as second duration or a second offset.

For example, the length of the time period #2 may be predefined.

Alternatively, the length of the time period #2 may be indicated by the first indication information.

Alternatively, the length of the time period #2 may be indicated by indication information (for example, fourth indication information) other than the first indication information. That is, the first device may send the fourth indication information to the second device, where the fourth indication information indicates the length of the time period #2.

For example, the start moment of the time period #2 may be any one of the following: a sending moment of the first indication information, a receiving moment of the first indication information, a moment indicated by the first indication information, a sending moment of other indication information, a receiving moment of other indication information, or a moment indicated by other indication information.

For example, the first indication information may indicate a moment B, and the moment B may be used as the start moment of the time period #2.

For another example, the first indication information may indicate uplink information B, and a sending moment of the uplink information B may be used as the start moment of the time period #2. For example, the uplink information B may be CSI feedback information B, that is, a sending moment of the CSI feedback information B is used as the start moment of the time period #2.

For another example, the scheduling information of the first CSI feedback information may be the first indication information, or may be other indication information. A sending moment or receiving moment of the scheduling information of the first CSI feedback information may be used as the start moment of the time period #2.

For example, the end moment of the time period #2 may be a moment indicated by the first indication information or other indication information.

Further, the method 700 may further include: sending the uplink information on the first time resource. The time unit in which the reset status information of the first AI model takes effect is not later than the start moment of the first time resource.

Sending the uplink information on the first time resource may be indicated by the first indication information, or may be indicated by other indication information.

In this case, the second device may determine the time period #2, determine, based on the time period #2, the time unit in which the status information of the first AI model takes effect, and determine the first time resource based on the time unit in which the status information of the first AI model takes effect.

In a third possible implementation, the first indication information may indicate the time unit in which the reset status information of the first AI model takes effect.

For example, the first indication information may indicate an identifier of the time unit in which the reset status information of the first AI model takes effect.

The following describes how to indicate a manner of resetting the status information of the first AI model.

The first device may send indication information to the second device, to indicate the second device to reset the status information of the first AI model.

In a first possible implementation, the first indication information may indicate resetting of the status information of the first AI model.

The first indication information may indicate the second device to reset the status information of the first AI model. The second device may determine, based on the first indication information, the time unit in which the reset status information of the first AI model takes effect.

For example, the time unit in which the reset status information of the first AI model takes effect is related to the time period #2. For example, the length of the time period #2 is predefined, and the start moment of the time period #2 is the sending moment of the first indication information. After receiving the first indication information, the second device may determine the time period #2, and further determine the time unit in which the reset status information of the first AI model takes effect.

In a second possible implementation, the method 700 may further include: obtaining second indication information, where the second indication information indicates resetting of the status information of the first AI model.

The second indication information may be from the first device.

The first indication information and the second indication information are different indication information. The first indication information and the second indication information may be carried in same signaling, or may be carried in different signaling.

For example, the time unit in which the reset status information of the first AI model takes effect is related to the time period #2. For example, a sending moment or a receiving moment of the second indication information is the start moment of the time period #2, and the length of the time period #2 may be indicated by the first indication information. After receiving the first indication information and the second indication information, the second device may determine the time period #2 based on the length of the time period #2 and the start moment of the time period #2, and further determine the time unit in which the reset status information of the first AI model takes effect.

For example, the time unit in which the reset status information of the first AI model takes effect is related to the first time resource. For example, a sending moment or a receiving moment of the second indication information is the start moment of the time period #1, and the length of the time period #1 is predefined. After receiving the first indication information and the second indication information, the second device may determine the time period #1 based on the length of the time period #1 and the start moment of the time period #1, determine the first time resource based on the time period #1, and further determine, based on the first time resource, the time unit in which the reset status information of the first AI model takes effect, that is, determine to enable the reset status information of the first AI model to take effect in a time unit that is not later than the first time resource.

As described above, that the first indication information is used to determine the time unit in which the status information of the first AI model takes effect may include the following form: The first indication information may indicate time information related to determining the time unit in which the status information of the first AI model takes effect (for example, the length of the time period #1 or the length of the time period #2), where the sending moment or the receiving moment of the first indication information may be used as the time information related to determining the time unit in which the status information of the first AI model takes effect (for example, the start moment of the time period #1 or the start moment of the time period #2); or the first indication information may be used to trigger determining of the time unit in which the status information of the first AI model takes effect.

Resetting status information of an AI model requires specific processing time. In this period of time, neither the network device side nor the terminal device side wants to perform corresponding inference by using the AI model, to avoid deterioration in quality of obtained CSI feedback information. The following describes a solution for ensuring quality of the CSI feedback information when the status information of the AI model is reset.

In a possible implementation, the method 700 may further include: The second device obtains scheduling information of second CSI feedback information. A time resource for the second CSI feedback information indicated by the scheduling information overlaps a time period #3 (an example of the first time period). In this case, the second device ignores or skips sending of the second CSI feedback information. The second CSI feedback information is related to the first AI model.

For example, the first device may be a network device, and the second device may be a terminal device. The network device may send the scheduling information of the second CSI feedback information to the terminal device.

For example, the first device may be a network device, and the second device may be an AI entity serving a terminal device. For example, the terminal device may receive the scheduling information of the second CSI feedback information from the network device, and the AI entity may obtain the scheduling information of the second CSI feedback information from the terminal device.

For example, the scheduling information of the second CSI feedback information may be sent before the first indication information is sent.

The time resource for the CSI feedback information indicated by the scheduling information may alternatively be replaced with a time resource used for CSI feedback information transmission, sending time of the CSI feedback information indicated by the scheduling information, a moment at which the CSI feedback information is scheduled to be sent, a moment at which an uplink (uplink, UL) grant (grant) is scheduled, a time unit for sending the CSI feedback information, or the like.

The second CSI feedback information may be an output of the first AI model, or may be an output based on the first AI model. For example, quantization processing is performed on an output result of the first AI model, to obtain the second CSI feedback information.

Specifically, a channel measurement result of a second reference signal is input into the first AI model for processing, and the first AI model outputs the second CSI feedback information, or the second CSI feedback information is determined based on the output of the first AI model.

For specific descriptions of generating the second CSI feedback information by using the first AI model, refer to the foregoing procedure of generating the CSI feedback information. Details are not described herein again.

The time period #3 may include the time unit in which the reset status information of the first AI model takes effect.

For example, the time period #3 may be the time period #1.

For another example, the time period #2 may include the time unit in which the reset status information of the first AI model takes effect. In this case, the time period #3 may be the time period #2.

The time period #3 includes the time unit in which the reset status information of the first AI model takes effect, that is, the reset status information of the first AI model takes effect in the time period #3. If the time resource for the second CSI feedback information indicated by the scheduling information overlaps the time period #3, the second CSI feedback information may be generated when the reset status information of the first AI model takes effect, or may be generated when the reset status information of the first AI model has not taken effect. If the second AI model side obtains the second CSI feedback information, the second AI model side cannot determine whether the second CSI feedback information is generated when the reset status information of the first AI model takes effect, and therefore cannot determine whether to use the reset status information of the second AI model to recover channel information corresponding to the second CSI feedback information. This may affect accuracy of the recovered channel information.

In the solutions of embodiments of this application, if the sending time of the CSI feedback information (for example, the second CSI feedback information) indicated by the scheduling information overlaps the time period #3, sending of the CSI feedback information is ignored or skipped. In this way, a case in which the second AI model side cannot determine whether the second CSI feedback information is generated when the reset status information of the first AI model takes effect can be avoided, thereby preventing the second AI model from recovering channel information based on unmatched status information, and helping ensure accuracy of the recovered channel information.

In another possible implementation, the method 700 may further include: The first device sends scheduling information of third CSI feedback information, where a time resource for the third CSI feedback information indicated by the scheduling information does not include the time period #3; and the first device receives the third CSI feedback information. The third CSI feedback information is related to the first AI model.

For example, the first device may be a network device, and the second device may be a terminal device. The network device may send the scheduling information of the third CSI feedback information to the terminal device.

The third CSI feedback information may be an output of the first AI model, or may be an output based on the first AI model. For example, quantization processing is performed on an output result of the first AI model, to obtain the third CSI feedback information.

Specifically, a channel measurement result of a third reference signal is input into the first AI model for processing, and the first AI model outputs the third CSI feedback information, or the third CSI feedback information is determined based on the output of the first AI model.

For specific descriptions of generating the third CSI feedback information by using the first AI model, refer to the foregoing procedure of generating the CSI feedback information. Details are not described herein again.

For descriptions of the time period #3, refer to the foregoing descriptions. Details are not described herein again.

In the solutions of embodiments of this application, sending time of CSI feedback information (for example, the third CSI feedback information) indicated by scheduling information does not include the time period #3. In this way, a case in which the second AI model side cannot determine whether the third CSI feedback information is generated when the reset status information of the first AI model takes effect can be avoided, thereby preventing the second AI model side from recovering channel information based on unmatched status information, and helping ensure accuracy of the recovered channel information. For example, if the time resource for the third CSI feedback information indicated by the scheduling information is before the time period #3, the reset status information of the first AI model has not taken effect, and the third CSI feedback information is generated when the reset status information of the first AI model has not taken effect. In this case, the second AI model side may determine that the third CSI feedback information is generated when the reset status information of the first AI model has not taken effect, and further recover channel information, thereby helping ensure accuracy of the recovered channel information.

The following describes an association between resetting of status information of an AI model and taking effect of the reset status information.

In a possible implementation, a time interval between a start moment at which the status information of the first AI model is reset and a target moment may be greater than or equal to duration required for resetting the status information of the first AI model. The target moment is the time unit in which the reset status information of the first AI model takes effect and that is determined based on the first indication information.

The start moment at which the status information of the first AI model is reset is a moment at which the status information of the first AI model starts to be reset.

For example, the second device may determine, based on the target moment and the duration required for resetting the status information of the first AI model, the moment at which the status information of the first AI model starts to be reset.

In this way, it can be ensured that the second device has sufficient time to complete resetting of the status information of the first AI model, so that the reset status information of the first AI model can take effect at the target moment.

The duration required for resetting the status information of the first AI model may be determined in a plurality of manners.

Optionally, the duration required for resetting the status information of the first AI model may be predefined.

Optionally, the method 700 may further include: The second device sends third indication information to the first device or a device other than the first device, where the third indication information indicates the duration required for resetting the status information of the first AI model.

For example, the first device may be a network device, and the second device may be a terminal device. The terminal device may send the third indication information to the network device, to notify the network device of the duration required for resetting the status information of the first AI model. Alternatively, the terminal device may send the third indication information to a core network device, to notify the core network device of the duration required for resetting the status information of the first AI model. The network device may obtain, from the core network device, the duration required for resetting the status information of the first AI model.

Optionally, the third indication information is carried in signaling, sent by the terminal device, that carries a capability of the terminal device.

That is, the duration required for resetting the status information of the first AI model is reported in reporting of the capability of the terminal device. For example, the first device may be a network device, and the second device may be a terminal device. The terminal device may report a capability of the terminal device to the network device. Alternatively, the terminal device may report the capability of the terminal device to a core network device. The network device may obtain the capability of the terminal device from the core network device.

The capability of the terminal device may also be referred to as a UE capability.

Optionally, the third indication information is carried in signaling that carries configuration (configuration) information of the first AI model. For example, the first device may be a network device, and the second device may be a terminal device. In a process in which the terminal device and the network device perform model identification and model matching, the duration required for resetting the status information of the first AI model may be reported in configuration information of a model.

For example, the second device may report the configuration information in a two-side offline interaction manner. The two sides are a transmitter and a receiver of the third indication information.

For another example, the second device may report the configuration information through exchanging of higher layer signaling such as RRC signaling.

The configuration information of the model may include one or more of a processing delay of the model, an application function, structure information of the model, parameter information of the model, and the like. Optionally, the first indication information is related to the duration required for resetting the status information of the first AI model.

The first indication information may be determined based on the duration required for resetting the status information of the first AI model.

For example, when the time period #2 includes the time unit in which the reset status information of the first AI model takes effect, the length of the time period #2 may be greater than or equal to the duration required for resetting the status information of the first AI model.

For example, the length of the time period #2 is indicated by the first indication information. For example, the first device may determine the length of the time period #2 based on the duration required for resetting the status information of the first AI model, and indicate the length of the time period #2 to the second device.

Further, the second device may determine, based on the end moment of the time period #2 and the duration required for resetting the first AI model, the start moment at which the status information of the first AI model is reset. A time interval between the start moment at which the status information of the first AI model is reset and the end moment of the time period #2 may be greater than or equal to the duration required for resetting the first AI model.

In this way, it ensures that the second device has sufficient time to complete resetting of the status information of the first AI model, so that the reset status information of the first AI model takes effect.

The first device may indicate, in a plurality of indication manners, resetting and/or taking effect of the status information of the model of the second device, that is, the first indication information may be indicated in a plurality of indication manners.

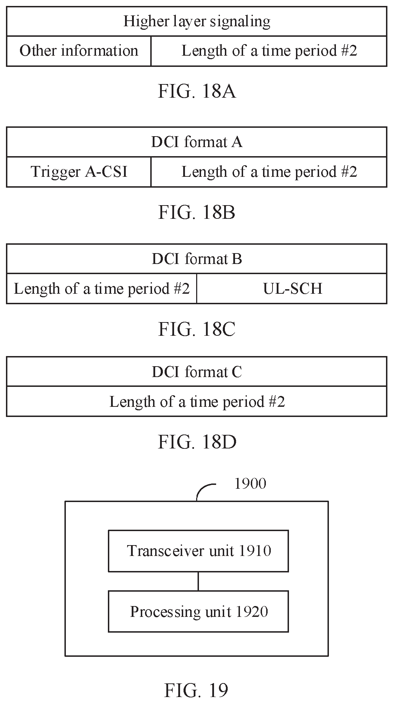

FIG. 18A, FIG. 18B, FIG. 18C, and FIG. 18D are diagrams of four types of indication signaling of the first indication information. The following describes the indication manners of the first indication information by using an example with reference to FIG. 18A, FIG. 18B, FIG. 18C, and FIG. 18D.

Optionally, the first indication information may be carried in first DCI and/or higher layer signaling. The higher layer signaling may include one or more of radio resource control (radio resource control, RRC) signaling or media access control control element (medium access control control element, MAC-CE) signaling.

The higher layer signaling may also be referred to as higher layer configuration signaling.

For example, as shown in FIG. 18A, the first indication information may indicate the length of the time period #2. The length of the time period #2 may be indicated through the higher layer signaling. The higher layer signaling may further indicate other information (others).

Optionally, the first DCI is further used to trigger the first CSI feedback information, and the first CSI feedback information belongs to an aperiodic CSI report.

For example, as shown in FIG. 18B, the first DCI may be in a DCI format (format) A. In the DCI format, the first indication information may indicate the length of the time period #2. The length of the time period #2 may be indicated by DCI that triggers an aperiodic CSI report (aperiodic CSI report, A-CSI report). The A-CSI report includes the first CSI feedback information.

Optionally, the first DCI is further used to schedule or configure an uplink shared channel (uplink shared channel, UL-SCH), and the uplink shared channel does not include CSI feedback information.

For example, as shown in FIG. 18C, the first DCI may be in a DCI format B. In the DCI format, the first indication information may indicate the length of the time period #2. The length of the time period #2 may be indicated by DCI used to schedule or configure an UL-SCH. The UL-SCH does not include CSI feedback information. In this case, the first DCI is not used to trigger A-CSI. The first DCI may be a UL grant, and is used to schedule or configure a UL-SCH without triggering A-CSI (UL-SCH without indicating A-CSI).

Optionally, the first DCI is further used to carry first indication information of another terminal device.

In other words, the first DCI may carry first indication information of a plurality of terminal devices.

For example, the first DCI may not be used to schedule or configure an UL-SCH, and is not used to trigger A-CSI. The first DCI may be used to carry only first indication information of one or more terminal devices. The first DCI may be a UL grant that is not used to schedule or configure an UL-SCH and is not used to trigger A-CSI (UL grant without UL-SCH without A-CSI).

For example, as shown in FIG. 18D, the first DCI may be in a DCI format C. In the DCI format, the first indication information may indicate the length of the time period #2. The length of the time period #2 may be indicated by DCI, where the DCI is not used to schedule or configure an UL-SCH, and is not used to trigger A-CSI.

The method 700 in embodiments of this application may be applied to a CSI feedback procedure between a plurality of terminal devices and a network device. For example, the first device may be a network device, second devices may be terminal devices, and the network device may send the first indication information to the plurality of terminal devices. For different terminal devices, content indicated by the first indication information may be the same or different. For example, the first indication information may indicate the length of the time period #2. For different terminal devices, the length of the time period #2 may be the same or different.

The network device may send the first DCI to the plurality of terminal devices, and the first DCI may carry first indication information of the plurality of terminal devices. The plurality of terminal devices separately obtain respective first indication information from the first DCI.

FIG. 8 is a schematic flowchart of another communication method according to an embodiment of this application. A method 800 shown in FIG. 8 may be considered as a specific implementation of the method 700 shown in FIG. 7. For related descriptions, refer to the method 700. To avoid repetition, some descriptions are appropriately omitted when the method 800 is described.

As shown in FIG. 8, the method 800 may include the following steps.

810: A first device sends first indication information to a second device. The first indication information is used to determine a time unit in which reset status information of a first AI model takes effect.

820: The second device determines the time unit in which the reset status information of the first AI model takes effect.

The second device may determine, based on the first indication information, the time unit in which the reset status information of the first AI model takes effect.

830: The second device resets the status information of the first AI model.

The second device may reset the status information of the first AI model based on the time unit determined in step 820.

840: The second device generates first CSI feedback information.

The second device may generate the first CSI feedback information by using the reset status information of the first AI model.

850: The second device sends the first CSI feedback information to the first device.

For example, the second device may send the first CSI feedback information to the first device in a first time unit. The time unit in which the reset status information of the first AI model takes effect is not later than the first time unit.

It should be understood that step numbers in the method in this embodiment of this application are merely used for ease of description, and do not constitute a limitation on an execution sequence of the steps.

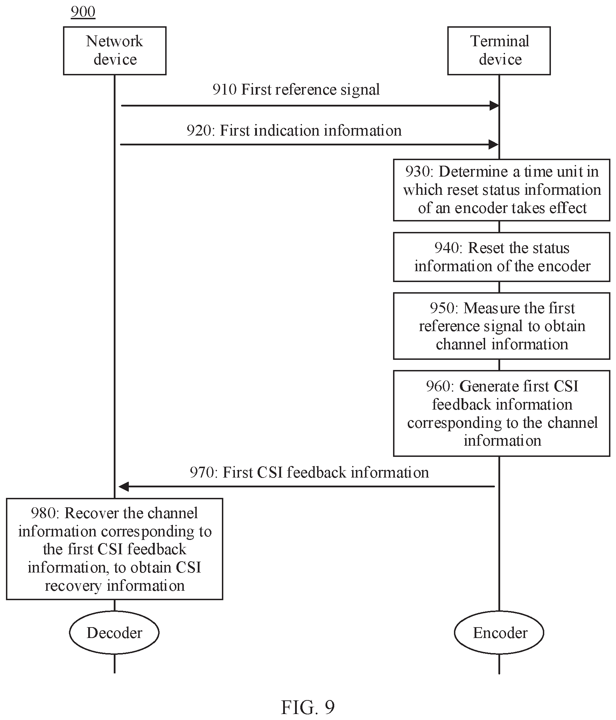

As described above, in different CSI feedback scenarios, a first device and a third device may be different devices. With reference to FIG. 9 to FIG. 13, the following describes, by using examples, a case in which the method in embodiments of this application is applied to different CSI feedback scenarios.

FIG. 9 is a schematic flowchart of still another communication method according to an embodiment of this application. A method 900 shown in FIG. 9 may be considered as a specific implementation of the method shown in FIG. 7 or FIG. 8. For related descriptions, refer to the foregoing descriptions. To avoid repetition, some descriptions are appropriately omitted when the method 900 is described.

As shown in FIG. 9, in the method 900, a first device is a network device, a second device is a terminal device, an encoder (an example of a first AI model) is deployed on the terminal device, and a decoder (an example of a second AI model) is deployed on the network device. The method 900 may include the following steps.

910: The network device sends a first reference signal to the terminal device.

920: The network device sends first indication information to the terminal device. The first indication information is used to determine a time unit in which reset status information of the first AI model takes effect.

930: The terminal device determines, based on the first indication information, the time unit in which the reset status information of the encoder takes effect.

For example, the first indication information indicates a length of a time period #2, and a start moment of the time period #2 may be a sending moment of the first indication information. The terminal device may determine the time period #2 based on the sending moment of the first indication information and the length of the time period #2. The time unit in which the reset status information of the encoder takes effect is within the time period #2.

940: The terminal device resets the status information of the encoder.

The terminal device may complete resetting of the status information of the encoder in the time period #2.

950: The terminal device measures the first reference signal, to obtain channel information.

960: The terminal device generates first CSI feedback information based on the reset status information of the encoder.

The channel information is input into the encoder for processing, to obtain the first CSI feedback information corresponding to the channel information, where the first CSI feedback information is feedback information of the channel information. In this case, the status information of the encoder has been reset. The first CSI feedback information is CSI feedback information generated when the reset status information of the encoder takes effect.

970: The terminal device sends the first CSI feedback information to the network device.

The terminal device sends the first CSI feedback information to the network device in a first time unit through uplink control information (uplink control information, UCI). The first time unit is not earlier than the time unit determined in step 930.

980: The network device recovers, based on reset status information of the decoder, the channel information corresponding to the first CSI feedback information.

The network device learns that the first CSI feedback information is generated when the reset status information of the encoder takes effect, and may recover, based on the reset status information of the decoder, the channel information corresponding to the first CSI feedback information.

The first CSI feedback information is input into the decoder for processing, or the processed first CSI feedback information is input into the decoder for processing, to obtain CSI recovery information corresponding to the first CSI feedback information. In this case, the status information of the decoder has been reset. The CSI recovery information corresponding to the first CSI feedback information is channel information recovered when the reset status information of the decoder takes effect.

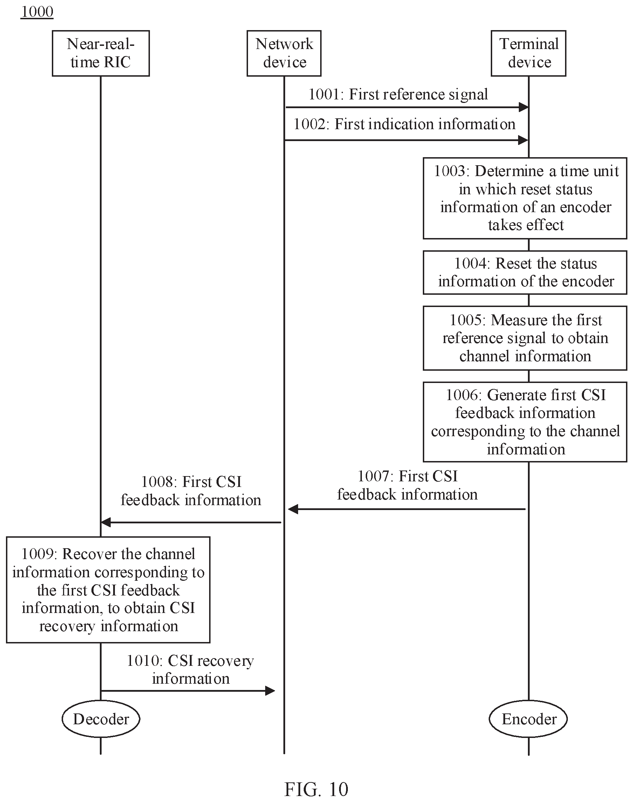

FIG. 10 is a schematic flowchart of yet another communication method according to an embodiment of this application. A method 1000 shown in FIG. 10 may be considered as a specific implementation of the method shown in FIG. 7 or FIG. 8.

As shown in FIG. 10, in the method 1000, a first device is a network device, a second device is a terminal device, an encoder (an example of a first AI model) is deployed on the terminal device, and a decoder (an example of a second AI model) is deployed on an AI entity that communicates with the network device, for example, a near-real-time RIC (an example of a third device).

A main difference between FIG. 10 and FIG. 9 lies in that, in the method 1000 shown in FIG. 10, channel information is recovered by the decoder in the near-real-time RIC. Specifically, step 1001 to step 1007 in the method 1000 are consistent with step 910 to step 970 in the method 900 in FIG. 9. For related descriptions, refer to the method 900. Details are not described herein again. The method 1000 further includes step 1008, step 1009, and step 1010.

1008: The network device sends the first CSI feedback information to the near-real-time RIC.

1009: The near-real-time RIC recovers, based on reset status information of the decoder, channel information corresponding to the first CSI feedback information.

The first CSI feedback information is input into the decoder for processing, or the processed first CSI feedback information is input into the decoder for processing, to obtain CSI recovery information corresponding to the first CSI feedback information. In this case, the status information of the decoder has been reset. The CSI recovery information corresponding to the first CSI feedback information is channel information recovered when the reset status information of the decoder takes effect.

1010: The near-real-time RIC sends the CSI recovery information corresponding to the first CSI feedback information to the network device.

In addition, the first indication information may alternatively be sent by the near-real-time RIC to the terminal device. That is, the first device may be a near-real-time RIC, and the second device may be a terminal device. A decoder may be deployed on the near-real-time RIC. For example, the network device in step 920, step 970, and step 980 in the method 900 may be replaced with the near-real-time RIC. After step 980 is performed, the near-real-time RIC sends the CSI recovery information corresponding to the first CSI feedback information to the network device.

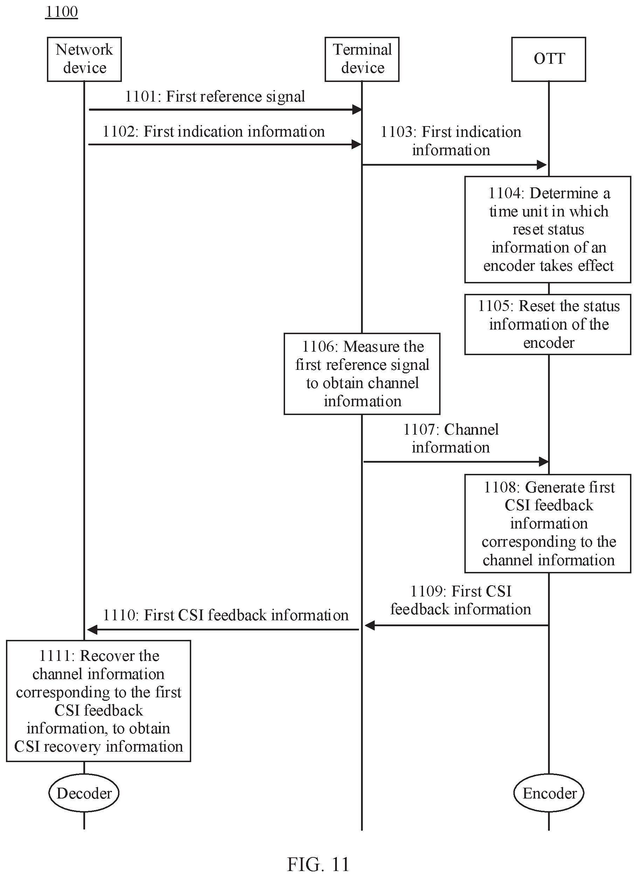

FIG. 11 is a schematic flowchart of still yet another communication method according to an embodiment of this application. A method 1100 shown in FIG. 11 may be considered as a specific implementation of the method shown in FIG. 7 or FIG. 8. For related descriptions, refer to the foregoing descriptions. To avoid repetition, some descriptions are appropriately omitted when the method 1100 is described.

As shown in FIG. 11, in the method 1100, a first device is a network device, a second device is an AI entity on a terminal device side, for example, a server such as an OTT device or an OAM, an encoder is deployed on the AI entity on the terminal device side, for example, a server such as an OTT device, or an OAM, and a decoder is deployed on a network device (an example of a third device). The method 1100 may include the following steps.

1101: The network device sends a first reference signal to the terminal device.

1102: The network device sends first indication information to the terminal device. The first indication information is used to determine a time unit in which reset status information of a first AI model takes effect.

1103: The terminal device sends the first indication information to an OTT server.

For example, the first indication information may indicate a length of a time period #2.

1104: The OTT server determines, based on the first indication information, the time unit in which the reset status information of the encoder takes effect.

For example, the network device may deliver DCI to the terminal device, where the DCI may be used to carry the first indication information, and the DCI further indicates to schedule first CSI feedback information. The OTT server may determine, based on a sending moment of the DCI and the length of the time period #2, that the time unit in which the reset status information of the encoder takes effect is not later than an end moment of the time period #2.

For example, a moment at which the first CSI feedback information is scheduled to be fed back may be the end moment of the time period #2.

The foregoing is merely an example. For another determining manner, refer to the foregoing descriptions. Details are not described herein again.

1105: The OTT server resets the status information of the encoder.

The OTT server may complete resetting of the status information of the encoder based on the time unit determined in step 1104.

1106: The terminal device measures the first reference signal, to obtain channel information.

1107: The terminal device sends the channel information to the OTT server.

1108: The OTT server generates, based on the reset status information of the encoder, the first CSI feedback information corresponding to the channel information.

The channel information is input into the encoder for processing, to obtain the first CSI feedback information. In this case, the status information of the encoder has been reset. The first CSI feedback information is CSI feedback information generated when the reset status information of the encoder takes effect.

1109: The OTT server sends the first CSI feedback information to the terminal device.

1110: The terminal device sends the first CSI feedback information to the network device.

For example, the terminal device may send the first CSI feedback information to the network device at the end moment of the time period #2.

1111: The network device recovers, based on reset status information of the decoder, the channel information corresponding to the first CSI feedback information.

The network device learns that the first CSI feedback information is generated when the reset status information of the encoder takes effect, and may recover, based on the reset status information of the decoder, the channel information corresponding to the first CSI feedback information.

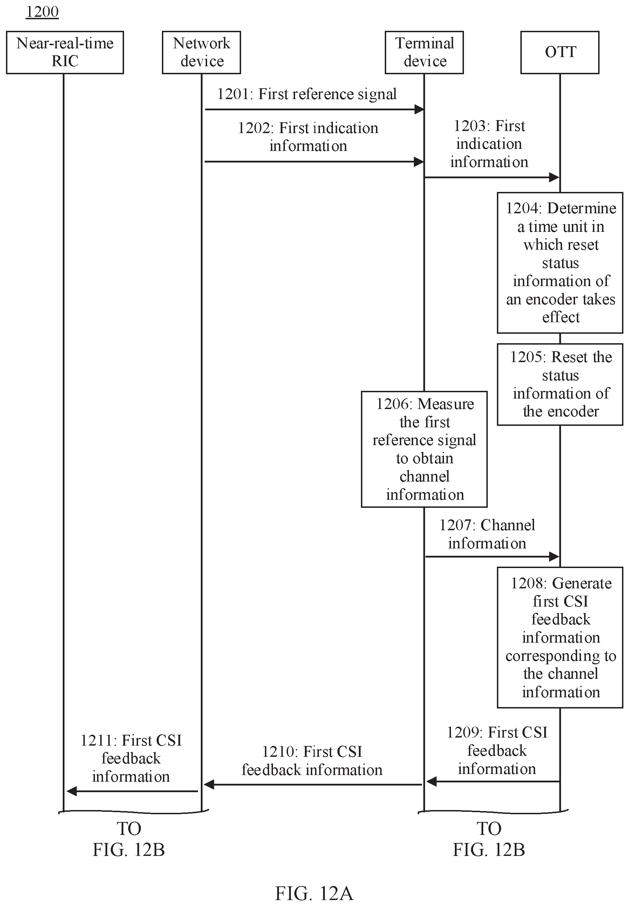

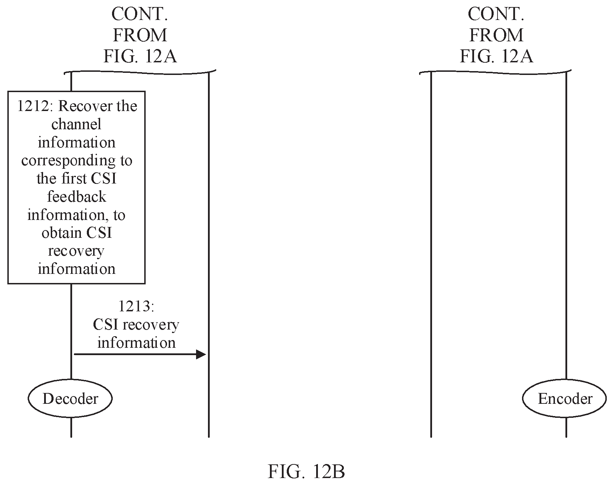

FIG. 12A and FIG. 12B are a schematic flowchart of a further communication method according to an embodiment of this application. A method 1200 shown in FIG. 12A and FIG. 12B may be considered as a specific implementation of the method shown in FIG. 7 or FIG. 8.

As shown in FIG. 12A and FIG. 12B, in the method 1200, a first device is a network device, a second device is an AI entity on a terminal device side, for example, a server such as an OTT device or an OAM, an encoder is deployed on the AI entity on the terminal device side, for example, a server such as an OTT device or an OAM, and a decoder is deployed on an AI entity on a network device side, for example, a near-real-time RIC (an example of a third device) that communicates with the network device.

A main difference between FIG. 12A and FIG. 12B and FIG. 11 lies in that, in the method 1200 shown in FIG. 12A and FIG. 12B, channel information is recovered by the decoder in the near-real-time RIC. Specifically, step 1201 to step 1210 in the method 1200 are consistent with step 1101 to step 1110 in the method 1100 in FIG. 11. For related descriptions, refer to the method 1100. Details are not described herein again. The method 1200 further includes step 1211 to step 1213. For descriptions of step 1211 to step 1213, refer to step 1008 to step 1010 in FIG. 10. Details are not described herein again.

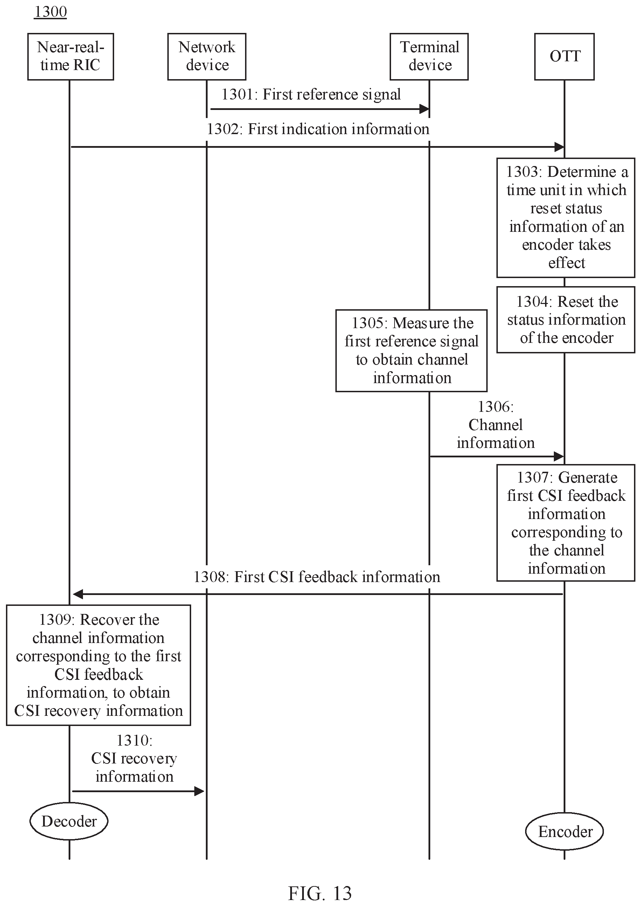

FIG. 13 is a schematic flowchart of a still further communication method according to an embodiment of this application. A method 1300 shown in FIG. 13 may be considered as a specific implementation of the method shown in FIG. 7 or FIG. 8. For related descriptions, refer to the foregoing descriptions. To avoid repetition, some descriptions are appropriately omitted when the method 1300 is described.

As shown in FIG. 13, in the method 1300, a first device is an AI entity on a network device side, for example, a near-real-time RIC that communicates with a network device, a second device is an AI entity on a terminal device side, for example, a server (for example, an OTT device) or an OAM that communicates with a terminal device, an encoder is deployed on the OTT server, and a decoder is deployed on the near-real-time RIC. The method 1300 may include the following steps.

1301: The network device sends a first reference signal to the terminal device.

1302: The near-real-time RIC sends first indication information to an OTT server. The first indication information is used to determine a time unit in which reset status information of a first AI model takes effect.

For example, the first indication information may be carried in a transparent transmission instruction.

For example, the near-real-time RIC may indicate a length of a time period #2 to the OTT server through the transparent transmission instruction.

1303: The OTT server determines, based on the first indication information, the time unit in which the reset status information of the encoder takes effect.

For example, the network device may deliver DCI to the terminal device, to indicate to schedule first CSI feedback information. The OTT server may determine, based on a sending moment of the DCI and the length of the time period #2, that the time unit in which the reset status information of the encoder takes effect is not later than an end moment of the time period #2.

For another example, the OTT server may determine, based on a sending moment of the first indication information and the length of the time period #2, that the time unit in which the reset status information of the encoder takes effect is not later than the end moment of the time period #2.

For example, a moment at which the first CSI feedback information is scheduled to be fed back may be the end moment of the time period #2.

The foregoing is merely an example. For another determining manner, refer to the foregoing descriptions. Details are not described herein again.

1304: The OTT server resets the status information of the encoder.

The OTT server may complete resetting of the status information of the encoder based on the time unit determined in step 1303.

1305: The terminal device measures the first reference signal, to obtain channel information.

1306: The terminal device sends the channel information to the OTT server.

1307: The OTT server generates, based on the reset status information of the encoder, the first CSI feedback information corresponding to the channel information.

For a process of generating the first CSI feedback information, refer to the foregoing descriptions. Details are not described herein again.

1308: The OTT server sends the first CSI feedback information to the near-real-time RIC.

For example, the OTT server may send the first CSI feedback information to the near-real-time RIC at the end moment of the time period #2. In this case, the end moment of the time period #2 may be considered as an example of a first time unit.

1309: The near-real-time RIC recovers, based on reset status information of the decoder, the channel information corresponding to the first CSI feedback information.

For a process of recovering CSI recovery information corresponding to the first CSI feedback information, refer to the foregoing descriptions. Details are not described herein again.

1310: The near-real-time RIC sends the CSI recovery information corresponding to the first CSI feedback information to the network device.

In addition, the first indication information may alternatively be sent by the network device to the OTT server. For example, if a decoder is deployed on the network device, step 1310 does not need to be performed, and the near-real-time RIC in the method 1300 is replaced with the network device. For another example, if a decoder is deployed on the near-real-time RIC, the near-real-time RIC in step 1301 to step 1308 may be replaced with the network device, and the network device sends the first CSI feedback information to the near-real-time RIC, and step 1309 and step 1310 continue to be performed.

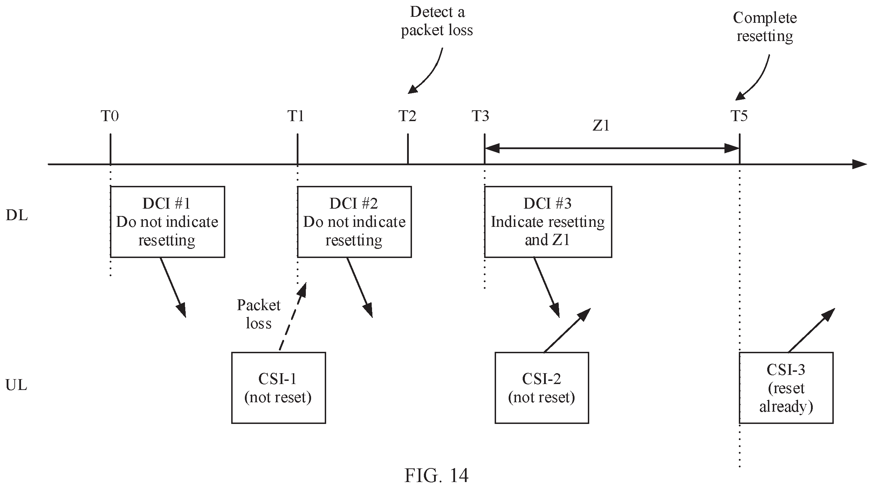

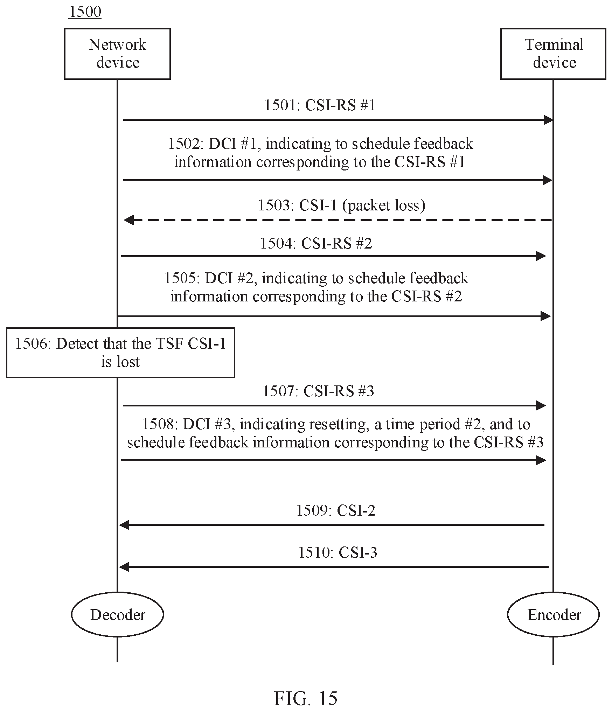

FIG. 14 is a diagram of a CSI feedback procedure according to an embodiment of this application. FIG. 15 is a schematic flowchart of a communication method used in the feedback procedure. The method shown in FIG. 15 may be considered as a specific implementation of the method shown in FIG. 7 or FIG. 8. For specific descriptions, refer to the foregoing descriptions. To avoid repetition, some descriptions are appropriately omitted when a method 1500 is described.

For ease of description, in FIG. 14 and FIG. 15, an example in which a first device is a network device and a second device is a terminal device is used for description. An encoder is deployed on the terminal device, and a decoder is deployed on the network device. For a case in which the first device and the second device are other devices, refer to FIG. 10 to FIG. 13 for adaptive modification. In FIG. 14 and FIG. 15, an example in which first indication information indicates a length of a time period #2 is used for description. In another implementation, the first indication information may further indicate other content, that is, the second device may further determine, in another manner, a time unit in which reset status information of a first AI model takes effect. For specific descriptions, refer to the method 700. Details are not described herein again.

As shown in FIG. 15, the method 1500 may include the following steps.

1501: The network device sends a CSI-RS #1 to the terminal device.

Before a moment T0 of the network device, the network device sends the CSI-RS #1 to the terminal device.

1502: The network device delivers DCI #1.

At the moment T0 of the network device, the network device delivers the DCI #1 to the terminal device on a downlink (downlink, DL), to indicate to schedule feedback information corresponding to the CSI-RS #1, for example, CSI-1.

1503: The terminal device feeds back the CSI-1.

The terminal device feeds back the CSI-1 in uplink UCI based on an indication of the network device. The CSI-1 is lost on an uplink. For example, due to a poor uplink transmission condition, the CSI-1 is lost. That is, the terminal device has sent the CSI-1, but the network device does not receive the CSI-1.

1504: The network device sends a CSI-RS #2 to the terminal device.

Before a moment T1 of the network device, the network device sends the CSI-RS #2 to the terminal device.

1505: The network device delivers DCI #2.

At the moment T1 of the network device, the network device delivers the DCI #2 to the terminal device, to indicate to schedule feedback information CSI-2 corresponding to the CSI-RS #2.

1506: The network device detects that the CSI-1 is lost.

At a moment T2 of the network device, the network device detects that the CSI-1 is lost.

1507: The network device sends a CSI-RS #3 to the terminal device.

Before a moment T3 of the network device, the network device sends the CSI-RS #3 to the terminal device.

1508: The network device delivers DCI #3.

At the moment T3 of the network device, the network device delivers the DCI #3 to the terminal device, to indicate the terminal device to reset status information of an encoder, and indicate a length Z1 of a time period #2. Z1 is a positive number. That is, the first indication information is carried in the DCI #3. A time unit in which the reset status information of the encoder takes effect is not later than an end moment of the time period #2. A start moment of the time period #2 is the moment T3. The end moment of the time period #2 is a moment T5=T3+Z1.

The terminal device determines, based on an indication of the network device, that the time unit in which the reset status information of the encoder takes effect is not later than the moment T5.

The DCI #3 further indicates to schedule feedback information CSI-3 corresponding to the CSI-RS #3. A moment at which the CSI-3 is scheduled to be fed back is the moment T5.

The terminal device determines, based on an indication of the network device, that the moment at which the CSI-3 is scheduled to be fed back is the moment T5.

1509: The terminal device feeds back the CSI-2.

Before T5, the terminal device feeds back the CSI-2 in the uplink UCI based on an indication of the network device. The network device receives the CSI-2, and learns that the CSI-2 is generated when the reset status information of the encoder does not take effect. The network device may recover, by using status information of a decoder that is not reset, channel information corresponding to the CSI-2.

1510: The terminal device feeds back the CSI-3.

The terminal device completes resetting of the status information of the encoder at a moment not later than the moment T5 based on an indication of the network device, that is, resetting has been completed at the moment T5. The CSI-3 is generated by using the reset status information of the encoder.

At the moment T5 of the network device, the terminal device feeds back the CSI-3 in the uplink UCI based on an indication of the network device. The moment T5 may be considered as an example of a first time unit. The CSI-3 may be used as an example of first CSI feedback information. The network device receives the CSI-3, and learns that the CSI-3 is generated when the reset status information of the encoder takes effect. The network device may recover, by using the reset status information of the decoder, channel information corresponding to the CSI-3.

FIG. 14 and FIG. 15 do not show a process of generating CSI feedback information and a process of recovering channel information corresponding to the CSI feedback information. For specific descriptions, refer to the method 700. Details are not described herein again.

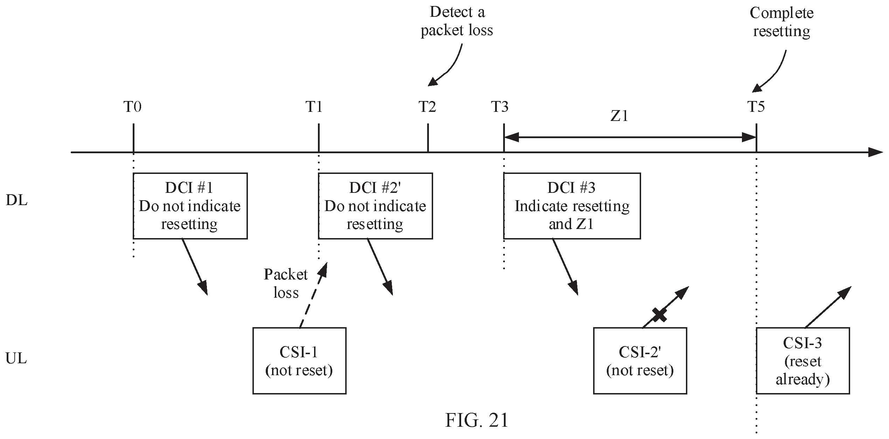

FIG. 21 is a diagram of another CSI feedback procedure according to an embodiment of this application.

For ease of description, in FIG. 21, an example in which a first device is a network device and a second device is a terminal device is used for description. An encoder is deployed on the terminal device, and a decoder is deployed on the network device. For a case in which the first device and the second device are other devices, refer to FIG. 10 to FIG. 13 for adaptive modification. In FIG. 21, an example in which first indication information indicates a length of a time period #2 is used for description. In another implementation, the first indication information may further indicate other content, that is, the second device may further determine, in another manner, a time unit in which reset status information of a first AI model takes effect. For specific descriptions, refer to the method 700.

A difference between the communication method used in the feedback procedure shown in FIG. 21 and the method 1500 shown in FIG. 15 mainly lies in that the network device delivers the DCI #2' to the terminal device, to indicate to schedule the feedback information CSI-2' corresponding to the CSI-RS #2. If a time resource for the CSI-2' indicated by the DCI #2' overlaps the time period #2, as shown in FIG. 21, a moment at which the CSI-2' is scheduled to be sent is within the time period #2, and the terminal device skips or ignores reporting of the CSI-2'. For other descriptions, refer to FIG. 15. To avoid repetition, some descriptions are appropriately omitted when FIG. 21 is described.

As shown in FIG. 21, at the moment T1 of the network device, the network device delivers the DCI #2' to the terminal device, to indicate to schedule the feedback information CSI-2' corresponding to the CSI-RS #2.

The terminal device determines, based on an indication of the network device, that the time unit in which the reset status information of the encoder takes effect is not later than the end moment of the time period #2, that is, the moment T5=T3+Z1. A moment at which the CSI-2' is scheduled for sending is between T3 and T5, and the terminal device skips or ignores reporting of the CSI-2'.

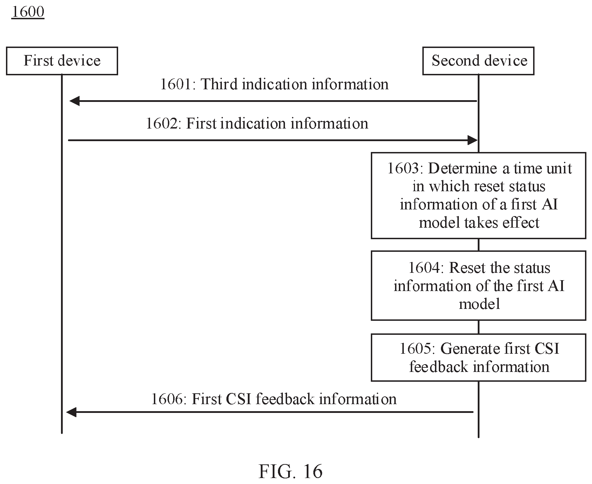

FIG. 16 is a schematic flowchart of a still yet further communication method according to an embodiment of this application. A method 1600 shown in FIG. 16 may be considered as a specific implementation of the method shown in FIG. 7 or FIG. 8. For related descriptions, refer to the foregoing descriptions. To avoid repetition, some descriptions are appropriately omitted when the method 1600 is described.

As shown in FIG. 16, the method 1600 may include the following steps.

1601: A second device sends third indication information to a first device. The third indication information indicates duration required for resetting status information of a first AI model.

1602: The first device sends first indication information to the second device. The first indication information is used to determine a time unit in which the reset status information of the first AI model takes effect.

The first device may determine, based on duration required for resetting the status information of the first AI model, the time unit in which the reset status information of the first AI model takes effect, and send the first indication information to the second device, so that the second device may determine the time unit in which the reset status information of the first AI model takes effect.

For example, the first device may determine a length of a time period #2 based on the duration required for resetting the status information of the first AI model, and indicate the length of the time period #2 to the second device through the first indication information. The length of the time period #2 is greater than or equal to the duration required for resetting the status information of the first AI model.

1603: The second device determines the time unit in which the reset status information of the first AI model takes effect.

The second device may determine, based on the first indication information, the time unit in which the reset status information of the first AI model takes effect.

For example, the first indication information indicates the length of the time period #2, and the time unit in which the reset status information of the first AI model takes effect is not later than an end moment of the time period #2.

1604: The second device resets the status information of the first AI model.

The second device may determine, based on the time unit determined in step 1603 and the duration required for resetting the status information of the first AI model, a moment at which the status information of the first AI model starts to be reset. A time interval between the moment at which the status information of the first AI model starts to be reset and the time unit determined in step 820 is greater than or equal to the duration required for resetting the status information of the first AI model.

For example, a time interval between the moment at which the status information of the first AI model starts to be reset and the end moment of the time period #2 is greater than or equal to the duration required for resetting the status information of the first AI model.

1605: The second device generates first CSI feedback information.

The second device may generate the first CSI feedback information by using the reset status information of the first AI model.

1606: The second device sends the first CSI feedback information to the first device.

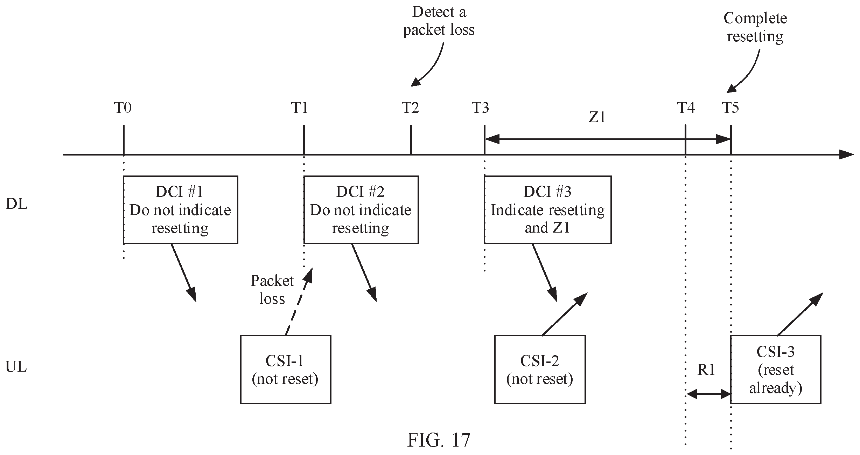

FIG. 17 is a diagram of a CSI feedback procedure according to an embodiment of this application.

For ease of description, in FIG. 17, an example in which a first device is a network device and a second device is a terminal device is used for description. An encoder is deployed on the terminal device, and a decoder is deployed on the network device. For a case in which the first device and the second device are other devices, refer to FIG. 10 to FIG. 13 for adaptive modification. In FIG. 17, an example in which first indication information indicates a length of a time period #2 is used for description. In another implementation, the first indication information may further indicate other content, that is, the second device may further determine, in another manner, a time unit in which reset status information of a first AI model takes effect. For specific descriptions, refer to the method 700.

A difference between the communication method used in the feedback procedure shown in FIG. 17 and the method 1500 shown in FIG. 15 mainly lies in that the terminal device reports, to the network device, duration R1 required for resetting the status information of the encoder. For other descriptions, refer to FIG. 15. To avoid repetition, some descriptions are omitted when FIG. 17 is described.
(1) At a moment T0 of the network device, the network device delivers DCI #1 to the terminal device, to indicate to schedule feedback information CSI-1 corresponding to a CSI-RS #1.
   Before the moment T0 of the network device, the network device has sent the CSI-RS #1 to the terminal device.
(2) The terminal device feeds back the CSI-1 in uplink UCI based on an indication of the network device.
   The CSI-1 is lost on an uplink.
(3) At a moment T1 of the network device, the network device delivers DCI #2 to the terminal device, to indicate to schedule feedback information CSI-2 corresponding to a CSI-RS #2.
   Before the moment T1 of the network device, the network device has sent the CSI-RS #2 to the terminal device.
(4) At a moment T2 of the network device, the network device detects that the CSI-1 is lost.
(5) At a moment T3 of the network device, the network device delivers DCI #3 to the terminal device, to indicate the terminal device to reset status information of the encoder, and indicate the length Z1 of the time period #2.

The network device may determine Z1 based on R1. Z1 is greater than or equal to R1. Z1 is a positive number, and R1 is a positive number.

The terminal device determines, based on an indication of the network device, that the time unit in which the reset status information of the encoder takes effect is not later than an end moment of the time period #2, that is, a moment T5=T3+Z1.

The DCI #3 further indicates to schedule feedback information CSI-3 corresponding to a CSI-RS #3. A moment at which the CSI-3 is scheduled to be fed back is the moment T5.

Before the moment T3 of the network device, the network device has sent the CSI-RS #3 to the terminal device.

The terminal device determines, based on an indication of the network device, that the moment at which the CSI-3 is scheduled to be fed back is the moment T5.

The terminal device may further determine, based on the moment T5 and R1, a moment at which the status information of the encoder starts to be reset. For example, the terminal device may determine to start to reset the status information of the encoder at a moment T4=T5-R1.

(6) Before the moment T5 of the network device, the terminal device feeds back the CSI-2 in the uplink UCI based on an indication of the network device.

The network device receives the CSI-2, and learns that the CSI-2 is generated when the reset status information of the encoder does not take effect. The network device may recover, by using status information of the decoder that is not reset, channel information corresponding to the CSI-2.

(7) At the moment T4 of the network device, the terminal device starts to reset the status information of the encoder.

After resetting is completed, the CSI-3 may be generated by using the reset status information of the encoder.

(8) At the moment T5 of the network device, the terminal device feeds back the CSI-3 in the uplink UCI based on an indication of the network device.

The network device receives the CSI-3, and learns that the CSI-3 is generated when the reset status information of the encoder takes effect. The network device may recover, by using the reset status information of the decoder, channel information corresponding to the CSI-3.

It can be understood that the information names used in some of the foregoing embodiments are merely examples and constitute no limitation on the protection scope of embodiments of this application.

It may be further understood that the formulas used in embodiments of this application are merely examples for description and constitute no limitation on the protection scope of embodiments of this application. In a process of calculating the foregoing related parameters, calculation may be performed based on the foregoing formulas, calculation may be performed based on variations of the foregoing formulas, or calculation may be performed in another manner, to satisfy calculation results of the formulas.

It may be further understood that, some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on implementation processes of embodiments of this application.

It may be further understood that, in the foregoing method embodiments, methods and operations implemented by a device may alternatively be implemented by a component (for example, a chip or a circuit) of the device.

In correspondence to the method provided in the foregoing method embodiments, embodiments of this application further provide corresponding apparatuses. The apparatuses include corresponding modules configured to perform the foregoing method embodiments. The module may be software, hardware, or a combination of software and hardware. It may be understood that the technical features described in the method embodiments are also applicable to the following apparatus embodiments.

FIG. 19 is a diagram of a communication apparatus 1900 according to an embodiment of this application. The apparatus 1900 includes a transceiver unit 1910 and a processing unit 1920. The transceiver unit 1910 may be configured to implement a corresponding communication function. The transceiver unit 1910 may also be referred to as a communication interface or a communication unit. The processing unit 1920 may be configured to implement a corresponding processing function, for example, configure a resource.

Optionally, the apparatus 1900 further includes a storage unit. The storage unit may be configured to store instructions and/or data. The processing unit 1920 may read the instructions and/or the data in the storage unit, to enable the apparatus to implement actions of a device or a network element in the foregoing method embodiments.

The communication apparatus 1900 may be a second device, or may be a communication apparatus that is used in the second device or used together with the second device and that can implement a communication method performed on a second device side. Alternatively, the communication apparatus 1900 may be a first device, or may be a communication apparatus that is used in the first device or used together with the first device and that can implement a communication method performed on a first device side.

When the apparatus 1900 is used in the second device, the apparatus 1900 may implement steps or procedures performed by the second device in the foregoing method embodiments. The transceiver unit 1910 may be configured to perform a sending/receiving-related operation of the second device in the foregoing method embodiments, and the processing unit 1920 may be configured to perform a processing-related operation of the second device in the foregoing method embodiments.

When the apparatus 1900 is used in the first device, the apparatus 1900 may implement steps or procedures performed by the first device in the foregoing method embodiments. The transceiver unit 1910 may be configured to perform a sending/receiving-related operation of the first device in the foregoing method embodiments, and the processing unit 1920 may be configured to perform a processing-related operation of the first device in the foregoing method embodiments.

It should be understood that specific processes of executing the foregoing corresponding steps by the units are described in detail in the foregoing method embodiments. For brevity, details are not described herein again.

It should be understood that the apparatus 1900 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 1900 may be specifically the first device in the foregoing embodiments, and may be configured to perform the processes and/or the steps corresponding to the first device in the foregoing method embodiments; or the apparatus 1900 may be specifically the second device in the foregoing embodiments, and may be configured to perform the processes and/or the steps corresponding to the second device in the foregoing method embodiments. To avoid repetition, details are not described herein again.

The apparatus 1900 in the foregoing solutions has a function of implementing corresponding steps performed by a device (for example, the first device or the second device) in the foregoing methods. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and related processing operations in the foregoing method embodiments.

In addition, the transceiver unit 1910 may alternatively be a transceiver circuit (for example, may include a receiving circuit and a sending circuit), and the processing unit 1920 may be a processing circuit. The processing circuit may include one or more processors, a circuit configured to process a function in the one or more processors, or the like.

It should be noted that the apparatus in FIG. 19 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

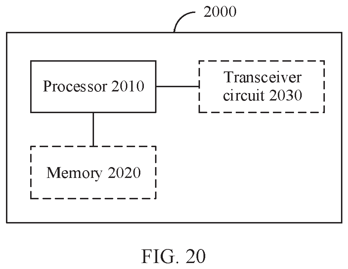

FIG. 20 is a diagram of another communication apparatus 2000 according to an embodiment of this application. The apparatus 2000 includes a processor 2010. The processor 2010 is configured to execute a computer program or instructions stored in a memory 2020, or read data/signaling stored in the memory 2020, to perform the methods in the foregoing method embodiments. Optionally, there are one or more processors 2010.

Optionally, as shown in FIG. 20, the apparatus 2000 further includes the memory 2020. The memory 2020 is configured to store the computer program or the instructions and/or data. The memory 2020 may be integrated with the processor 2010, or may be separately disposed. Optionally, there are one or more memories 2020.

Optionally, as shown in FIG. 20, the apparatus 2000 further includes a transceiver circuit 2030, and the transceiver circuit 2030 is configured to receive and/or send a signal. For example, the processor 2010 is configured to control the transceiver circuit 2030 to receive and/or send a signal. The processor 2010 may alternatively be replaced with a processing circuit.

The apparatus 2000 may be a network element or a device in the foregoing embodiments, or may be a chip or a chip system. When the apparatus 2000 is the network element or device in the foregoing embodiments, the transceiver circuit 2030 may be a transceiver. When the apparatus 2000 is the chip or the chip system, the transceiver circuit 2030 may be an interface circuit or an input/output interface.

In a solution, the apparatus 2000 may be used in a second device. Specifically, the apparatus 2000 may be the second device, or may be an apparatus that can support the second device in implementing the functions of the second device in any one of the foregoing examples. The apparatus 2000 is configured to implement operations performed by the second device in the foregoing method embodiments.

For example, the processor 2010 is configured to execute the computer program or the instructions stored in the memory 2020, to implement related operations of the second device in the foregoing method embodiments.

In another solution, the apparatus 2000 may be used in a first device. Specifically, the apparatus 2000 may be the first device, or may be an apparatus that can support the first device in implementing the functions of the first device in any one of the foregoing examples. The apparatus 2000 is configured to implement operations performed by the first device in the foregoing method embodiments.

For example, the processor 2010 is configured to execute the computer program or the instructions stored in the memory 2020, to implement related operations of the first device in the foregoing method embodiments.

It should be understood that the processor mentioned in this embodiment of this application may be a central processing unit (central processing unit, CPU), or may be another general-purpose processor, a digital signal processor (digital signal processor, DSP), an ASIC, a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these memories and any other appropriate type of memory.

An embodiment of this application further provides a computer-readable storage medium. The computer-readable storage medium stores computer instructions for implementing a method performed by a communication device in the foregoing method embodiments.

For example, when a computer program is executed by a computer, the computer is enabled to implement the method performed by the first device in the foregoing method embodiments.

For another example, when a computer program is executed by a computer, the computer is enabled to implement the method performed by the second device in the foregoing method embodiments.

An embodiment of this application further provides a computer program product, including instructions. When the instructions are executed by a computer, the method performed by a device (for example, the first device or the second device) in the foregoing method embodiments is implemented.

An embodiment of this application further provides a communication system, including the first device and the second device. The first device and the second device may implement the communication method shown in any one of the foregoing examples.

Optionally, the system further includes a device that communicates with the foregoing first device and/or second device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like. For example, the usable medium includes but is not limited to any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining first indication information from a first device, wherein the first indication information is used to determine a time unit in which reset status information of a first artificial intelligence AI model takes effect.

2. The method according to claim 1, wherein the method further comprises:
sending first channel state information CSI feedback information to the first device in a first time unit, wherein the first CSI feedback information is related to the reset status information of the first AI model, and the first time unit is not earlier than the time unit in which the reset status information of the first AI model takes effect.

3. The method according to claim 1 or 2, wherein the first indication information indicates to send uplink information on a first time resource, and the time unit in which the reset status information of the first AI model takes effect is not later than a start moment of the first time resource.

4. The method according to claim 3, wherein the method further comprises:
determining a first time period, wherein an end moment of the first time period is not later than the start moment of the first time resource, and a length of the first time period is predefined, is indicated by the first indication information, or is indicated by information other than the first indication information.

5. The method according to claim 1 or 2, wherein the method further comprises:
obtaining a length of a first time period, wherein the length of the first time period is used to determine the time unit in which the reset status information of the first AI model takes effect, and the length of the first time period is predefined, is indicated by the first indication information, or is indicated by information other than the first indication information.

6. The method according to claim 5, wherein a start moment of the first time period is a sending moment of the first indication information, a receiving moment of the first indication information, or a moment indicated by the first indication information.

7. The method according to any one of claims 4 to 6, wherein the method further comprises:
receiving scheduling information of second CSI feedback information, wherein a time resource for the second CSI feedback information indicated by the scheduling information overlaps the first time period, sending of the second CSI feedback information is ignored or skipped, and the second CSI feedback information is related to the first AI model.

8. The method according to any one of claims 1 to 7, wherein the first indication information indicates resetting of the status information of the first AI model.

9. The method according to any one of claims 1 to 7, wherein the method further comprises:
obtaining second indication information from the first device, wherein the second indication information indicates resetting of the status information of the first AI model.

10. The method according to any one of claims 1 to 9, wherein the first indication information is related to duration required for resetting the status information of the first AI model, and the duration required for resetting the status information of the first AI model is predefined.

11. The method according to any one of claims 1 to 9, wherein the first indication information is related to duration required for resetting the status information of the first AI model, and the method further comprises:
sending third indication information to the first device or a device other than the first device, wherein the third indication information indicates the duration required for resetting the status information of the first AI model.

12. The method according to claim 11, wherein the third indication information is carried in signaling, sent by a terminal device, that carries a capability of the terminal device, or the third indication information is carried in signaling that carries configuration information of the first AI model.

13. The method according to any one of claims 1 to 12, wherein the first indication information is carried in first downlink control information DCI and/or higher layer signaling, and the higher layer signaling comprises radio resource control signaling or media access control control element signaling.

14. The method according to claim 13, wherein the first DCI is any one of the following:
the first DCI is further used to trigger the first CSI feedback information, wherein the first CSI feedback information belongs to an aperiodic CSI report;
the first DCI is further used to schedule or configure an uplink shared channel, wherein the uplink shared channel does not comprise CSI feedback information; or
the first DCI is further used to carry first indication information of another terminal device.

15. The method according to any one of claims 2 to 14, wherein an input of the first AI model comprises a channel measurement result of a first reference signal, the first CSI feedback information is an output of the first AI model or an output based on the first AI model, the output of the first AI model is related to the measurement result of the first reference signal and the reset status information of the first AI model, and the reset status information of the first AI model is initial status information, or the reset status information of the first AI model is status information of the first AI model before a sending moment of the first reference signal.

16. A communication method, comprising:
sending first indication information to a second device, wherein the first indication information is used to determine a time unit in which reset status information of a first artificial intelligence AI model takes effect.

17. The method according to claim 16, wherein the method further comprises:
receiving first channel state information CSI feedback information from the second device in a first time unit, wherein the first CSI feedback information is related to the reset status information of the first AI model, and the first time unit is not earlier than the time unit in which the reset status information of the first AI model takes effect.

18. The method according to claim 16 or 17, wherein the first indication information indicates to send uplink information on a first time resource, and the time unit in which the reset status information of the first AI model takes effect is not later than a start moment of the first time resource.

19. The method according to claim 18, wherein the first indication information indicates a length of a first time period, or the method further comprises:
sending fourth indication information to the second device, wherein the fourth indication information indicates the length of the first time period, and
an end moment of the first time period is not later than the start moment of the first time resource.

20. The method according to claim 16 or 17, wherein the first indication information indicates a length of a first time period, or the method further comprises:
sending fourth indication information to the second device, wherein the fourth indication information indicates the length of the first time period, and
the length of the first time period is used to determine the time unit in which the reset status information of the first AI model takes effect.

21. The method according to claim 20, wherein a start moment of the first time period is a sending moment of the first indication information, a receiving moment of the first indication information, or a moment indicated by the first indication information.

22. The method according to any one of claims 19 to 21, wherein the method further comprises:
sending scheduling information of third CSI feedback information, wherein a time resource for the third CSI feedback information indicated by the scheduling information does not comprise the first time period; and
receiving the third CSI feedback information, wherein the third CSI feedback information is related to the first AI model.

23. The method according to any one of claims 16 to 22, wherein the first indication information indicates resetting of the status information of the first AI model.

24. The method according to any one of claims 16 to 22, wherein the method further comprises:
sending second indication information to the second device, wherein the second indication information indicates resetting of the status information of the first AI model.

25. The method according to any one of claims 16 to 24, wherein the first indication information is related to duration required for resetting the status information of the first AI model, and the duration required for resetting the status information of the first AI model is predefined.

26. The method according to any one of claims 16 to 24, wherein the first indication information is related to duration required for resetting the status information of the first AI model, and the method further comprises:
receiving third indication information from the second device or a device other than the second device, wherein the third indication information indicates the duration required for resetting the status information of the first AI model.

27. The method according to claim 26, wherein the third indication information is carried in signaling, sent by a terminal device, that carries a capability of the terminal device, or the third indication information is carried in signaling that carries configuration information of the first AI model.

28. The method according to any one of claims 16 to 27, wherein the first indication information is carried in first downlink control information DCI and/or higher layer signaling, and the higher layer signaling comprises radio resource control signaling or media access control control element signaling.

29. The method according to claim 28, wherein the first DCI is any one of the following:
the first DCI is further used to trigger the first CSI feedback information, wherein the first CSI feedback information belongs to an aperiodic CSI report;
the first DCI is further used to schedule or configure an uplink shared channel, wherein the uplink shared channel does not comprise CSI feedback information; or
the first DCI is further used to carry first indication information of another terminal device.

30. The method according to any one of claims 17 to 29, wherein an input of the first AI model comprises a channel measurement result of a first reference signal, the first CSI feedback information is an output of the first AI model or an output based on the first AI model, the output of the first AI model is related to the measurement result of the first reference signal and the reset status information of the first AI model, and the reset status information of the first AI model is initial status information, or the reset status information of the first AI model is status information of the first AI model before a sending moment of the first reference signal.

31. A computer-readable storage medium, wherein the computer-readable storage medium comprises instructions, and when the instructions are run by a processor, the method according to any one of claims 1 to 15 or 16 to 30 is implemented.

32. A communication apparatus, wherein the communication apparatus comprises a processor coupled to a storage medium, the storage medium stores instructions, and when the instructions are run by the processor, the communication apparatus is enabled to perform the method according to any one of claims 1 to 15 or 16 to 30.

33. A communication apparatus, comprising a module configured to perform the method according to any one of claims 1 to 15.

34. A communication apparatus, comprising a module configured to perform the method according to any one of claims 16 to 30.

35. A communication apparatus, comprising one or more processors, wherein the one or more processors are configured to process data and/or information, so that the method according to any one of claims 1 to 15 or 16 to 30 is implemented.

36. A chip, comprising a processor, wherein the processor is configured to run a program or instructions, so that the method according to any one of claims 1 to 15 or 16 to 30 is implemented.

37. A computer program product, wherein the computer program product comprises computer program code or instructions, and when the computer program code or the instructions are run, the method according to any one of claims 1 to 15 or 16 to 30 is implemented.

38. A communication system, comprising the communication apparatus according to claim 33 and/or the communication apparatus according to claim 34.
